(19) Europäisches Patentamt
European Patent Office
Office européen des brevets

(11) **EP 3 306 074 B1**

(12) **EUROPEAN PATENT SPECIFICATION**

(45) Date of publication and mention
of the grant of the patent:
**14.08.2019 Bulletin 2019/33**

(51) Int Cl.:
*F02P 7/067* (2006.01)       *F02N 11/08* (2006.01)
*H02P 6/16* (2016.01)         *G01P 3/487* (2006.01)
*F02N 11/04* (2006.01)        *H02P 6/08* (2016.01)

(21) Application number: **17193476.3**

(22) Date of filing: **27.09.2017**

(54) **ENGINE UNIT AND STRADDLED VEHICLE**

MOTOREINHEIT UND GRÄTSCHSITZFAHRZEUG

UNITÉ DE MOTEUR ET VÉHICULE DE TYPE À ENFOURCHER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2016 JP 2016189637**

(43) Date of publication of application:
**11.04.2018 Bulletin 2018/15**

(73) Proprietor: **Yamaha Hatsudoki Kabushiki Kaisha Iwata-shi Shizuoka 438-8501 (JP)**

(72) Inventors:
• **HINO, Haruyoshi**
  **Iwata-shi, Shizuoka 438-8501 (JP)**
• **NISHIKAWA, Takahiro**
  **Iwata-shi, Shizuoka 438-8501 (JP)**

(74) Representative: **Grünecker Patent- und Rechtsanwälte**
**PartG mbB**
**Leopoldstraße 4**
**80802 München (DE)**

(56) References cited:
**EP-A1- 1 233 175      EP-A1- 3 051 118**
**WO-A1-97/19358        WO-A1-2015/093554**
**US-A- 4 766 359       US-A- 5 225 759**

**Description**

[BACKGROUND ART]

For example, WO 2015/093554 A1 shows an engine unit mountable to a straddled vehicle. The engine unit includes a four-stroke engine body, a starter motor, and a control device. The starter motor includes a rotor and a stator. The rotor is rotated along with rotation of a crankshaft of the engine body. The stator includes stator windings. The control device includes a plurality of detection object parts and a rotor position detection device. The plurality of detection object parts are provided on an outer surface of the rotor. The rotor position detection device includes a detection-purpose winding. As the detection object parts move along with rotation of the rotor, a magnetic state changes so that an electrical signal flowing in the detection-purpose winding varies. The control device firstly performs on/off-operation of switching parts at predefined timings. As a result of the on/off-operation of the switching parts, a current flowing in the stator windings varies. The control device then performs on/off-operation of the switching parts at timings that are based on a variation in the electrical signal flowing in the detection-purpose winding. Thus, the control device is able to accelerate forward rotation of the crankshaft.

The rotor position detection device of WO 2015/093554 A1, which performs detection with the detection-purpose winding, has an excellent heat resistance. It is therefore not necessary that a special heat shield structure for protecting the rotor position detection device be provided in the engine unit. Accordingly, the engine unit of WO 2015/093554 A1 improves early-start ability of the four-stroke engine and mountability thereof to vehicle, irrespective of how the engine is cooled.

[SUMMARY OF THE INVENTION]

[PROBLEMS TO BE SOLVED BY THE INVENTION]

In an engine unit, there is a demand for further improvement in early-start ability with suppression of deterioration in mountability to vehicle.

An object of the present teaching is to provide an engine unit having its early-start ability further improved with suppression of deterioration in mountability to vehicle. Another object of the present teaching is to provide a vehicle equipped with such an engine unit.

[MEANS FOR SOLVING THE PROBLEMS]

The present inventors conducted studies on engine start. A conceivable way to improve early-start ability is to accelerate forward rotation of a crankshaft at an early stage. For example, it is conceivable that a cycle of variation in a current flowing in stator windings is shortened at an early stage.

[TECHNICAL FIELD]

The present teaching relates to an engine unit and a straddled vehicle.

[BACKGROUND ART]

For example, WO 2015/093554 A1 shows an engine unit mountable to a straddled vehicle. The engine unit includes a four-stroke engine body, a starter motor, and a control device. The starter motor includes a rotor and a stator. The rotor is rotated along with rotation of a crankshaft of the engine body. The stator includes stator windings. The control device includes a plurality of detection object parts and a rotor position detection device. The plurality of detection object parts are provided on an outer surface of the rotor. The rotor position detection device includes a detection-purpose winding. As the detection object parts move along with rotation of the rotor, a magnetic state changes so that an electrical signal flowing in the detection-purpose winding varies. The control device firstly performs on/off-operation of switching parts at predefined timings. As a result of the on/off-operation of the switching parts, a current flowing in the stator windings varies. The control device then performs on/off-operation of the switching parts at timings that are based on a variation in the electrical signal flowing in the detection-purpose winding. Thus, the control device is able to accelerate forward rotation of the crankshaft.

The rotor position detection device of WO 2015/093554 A1, which performs detection with the detection-purpose winding, has an excellent heat resistance. It is therefore not necessary that a special heat shield structure for protecting the rotor position detection device be provided in the engine unit. Accordingly, the engine unit of WO 2015/093554 A1 improves early-start ability of the four-stroke engine and mountability thereof to vehicle, irrespective of how the engine is cooled.

US 4,766,359 A discloses an absolute shaft position sensing circuit that uses a magnetic sensor and a toothed wheel to produce two pulse trains which are used to determine the absolute position of a shaft which is coupled to the toothed wheel. One pulse train includes regularly spaced pulses which are fed to a phase locked loop to produce an oscillating output signal. A counter counts this signal and produces an output count which is representative of the relative angular position of the shaft. A second pulse train includes an irregularly spaced pulse. Circuitry is provided to detect the occurrence of this irregularly spaced pulse and to reset the counter in response to that occurrence, thereby making the count representative of the absolute angular position of the shaft.

WO 97/19358 A1 discloses a position and speed sensor comprising a circular element rotatably driven about its axis. The circular element has two position indicators of different angular width. A sensor means is fixed in position with respect to and adjacent to the circular element. The sensor means has a sensing element for sensing the passage of each of the position indicators past the sensing element. An electrical signal is produced by the sensor means corresponding to the passage of each of the sensed position indicators. The signal has a duration corresponding to the angular widths of the sensed position indicators. Also included is a means to process the electrical signal to produce information as to the angular position and angular velocity of the circular element. A method for reverse rotation detection using the position and speed sensor means is also disclosed.

EP 1 233 175 A1 proposes a more efficient engine starting control by recognizing an absolute angle of a crank shaft in an engine. An absolute angle of the crank shaft is calculated on the basis of an ignition reference signal of the engine and a commutation position pulse signal of a starter motor, and the starter motor is controlled on the basis of the absolute angle. The starter motor is reverse-rotated on the basis of the calculated absolute angle and the crank shaft is temporarily reverse-rotated to an explosion stroke and thereafter is normal-rotated, and thereby the engine is started. Timing from the reverse rotation of the crank shaft to the normal rotation is accurately controlled by the absolute angle, and an efficient inertial starting control can be realized on a engine starting control without waste. Further, it is possible to accurately recognize the absolute angle of the crank shaft in the engine by a crank angle detecting apparatus without increasing the number of the reluctors.

EP 3 051 118 A1 discloses an engine unit according to the preamble of independent claim 1.

[SUMMARY OF THE INVENTION]

[PROBLEMS TO BE SOLVED BY THE INVENTION]

In an engine unit, there is a demand for further improvement in early-start ability with suppression of deterioration in mountability to vehicle.

An object of the present teaching is to provide an engine unit having its early-start ability further improved with suppression of deterioration in mountability to vehicle. Another object of the present teaching is to provide a vehicle equipped with such an engine unit.

[MEANS FOR SOLVING THE PROBLEMS]

The present inventors conducted studies on engine start. A conceivable way to improve early-start ability is to accelerate forward rotation of a crankshaft at an early stage. For example, it is conceivable that a cycle of variation in a current flowing in stator windings is Shortening the cycle of variation in the current flowing in the stator windings at an early stage, however, makes it likely that rotation of a rotor, which rotates in conjunction with a crankshaft, cannot follow a variation in the current flowing in the stator windings.

For example, in a case where rotation of the rotor fails to follow a variation in the current flowing in the stator windings, a series of operations need be redone. Here, if it takes time to detect a situation where rotation of the rotor fails to follow, a time period before the redo of operations is started is prolonged. A time period before engine start is prolonged.

Simply increasing output power characteristics of a starter motor is one conceivable way to accelerate forward rotation of the crankshaft at an early stage. Increasing the output power characteristics of the starter motor requires a size increase of the starter motor or a battery. This deteriorates mountability to vehicle.

The present inventors conducted studies on how to accelerate forward rotation of the crankshaft at an early stage without increasing the output power characteristics of the starter motor.

At a time of engine start, the rotor of the starter motor and the crankshaft start to rotate from their stopped state. At the time of engine start, therefore, the rotation speed of the crankshaft and the rotor is low.

On/off operation of switching parts is controlled based mainly on a timing at which a signal varies, the signal indicating detection of a detection object part which is moving along with forward rotation of the rotor. A timing of detection of the detection object part corresponds to a specific position of the rotor. At a time of engine start, unlike while the starter motor is generating power for example, the rotor has a low rotation speed, which prolongs the interval of detection of the detection object part. The accuracy of a rotor position control is likely to be low accordingly.

The present inventors considered more precisely controlling a variation in a current flowing in the stator windings.

To increase the accuracy of controlling, the present inventors considered increasing the number of detection object parts arranged in the rotor. The detection object part is, for example, a protruding portion arranged on an outer side of a yoke of the rotor.

A waveform of an electrical signal variation corresponding to a detection object part that is added for the number increase is identical to a waveform of an electrical signal variation corresponding to a detection object part that is originally provided before the number increase. It is therefore difficult to distinguish the electrical signal variations from each other. For example, it is difficult to determine which of a control corresponding to the detection object part that is originally provided and a control corresponding to the detection object part that is added is to be performed at a timing when a certain electrical signal variation after the rotor starts rotation.

The present inventors also considered increasing the number of detection devices. For example, providing a plurality of detection devices at different positions enables different position information to be obtained from a single detection object part.

Increasing the number of detection devices, however, leads to an increase in the number of component parts of the engine unit. Moreover, a space for arranging the added detection devices needs to be ensured in the engine unit. In conclusion, increasing the number of detection devices, as well as providing means for detecting the position at a high accuracy for example, deteriorates mountability of the engine unit to the straddled vehicle.

The present inventors conducted more detailed studies on a signal indicating that a detection device detects a detection object part.

The detection device outputs a signal according to passing of the detection object part through a position where the detection device performs detection. More specifically, an electrical signal flowing in a detection-purpose winding indicates a range from start to termination of passing of the detection object part. A signal variation indicating start of passing of the detection object part corresponds to a forward end of the detection object part with respect to a direction in which the detection object part moves. A signal variation indicating termination of the passing corresponds to a rearward end of the detection object part.

The present inventors conceived of using both a signal variation corresponding to the forward end of one detection object part and a signal variation corresponding to the rearward end of the same detection object part. Accordingly, twice the information is obtained about a rotor state.

In addition, a signal variation corresponding to the forward end of the detection object part and a signal variation corresponding to the rearward end of the detection object part appear in the form of different types of variations in the detection-purpose winding. It is therefore easy to distinguish the signal variation corresponding to the forward end of the detection object part from the signal variation corresponding to the rearward end of the detection object part. The distinction is made because a timing of a variation that is newly obtained is recognized as a timing applied to a rotor position different from a rotor position to which a timing of a previous variation is applied. The accuracy of controlling is improved accordingly. This enables a more precise control of a variation in the current flowing in the stator windings.

As above, a more precise control is enabled by using both the signal variation corresponding to the forward end of the detection object part and the signal variation corresponding to the rearward end of the detection object part.

Using both of the signal variations corresponding to the forward and rearward ends of the detection object part makes it easy that a variation in the current supplied to the stator windings is precisely adapted to rotation of the rotor. Particularly at a time of engine start, the rotation speed of the rotor is low. At this time, followability of rotation of the rotor can be improved by the precise control using both of the signal variations corresponding to the forward and rearward ends. This makes it possible that, for example, a cycle of performing on/off operation of the switching part be shortened at an early stage, to accelerate rotation of the rotor at an early stage.

In addition, for example, using both of the signal variations corresponding to the forward and rearward ends of the detection object part also allows desynchronization (step out) of the rotor to be detected at an early stage. In a case of desynchronization of the rotor, therefore, a control of the current supplied to the stator winding can be redone at an early stage. The redoing at the early stage improves the followability of rotation of the rotor.

The present teaching is a teaching accomplished based on the findings described above.

To solve the problems described above, the present teaching adopts the following configurations.

(1) An engine unit mountable to a straddled vehicle, the engine unit including:

a four-stroke engine body in which a high-load region and a low-load region occur during four strokes in a state where combustion is stopped, the high-load region having a high load on rotation of the crankshaft, the low-load region having a lower load on rotation of the crankshaft than that of the high-load region;

a starter motor including a stator, a rotor, and a plurality of detection object parts, the stator having a stator core that is provided with a plurality of teeth arranged at intervals with respect to a circumferential direction and multi-phase stator windings that are wound on the plurality of teeth, the rotor having a permanent magnet part provided outside the stator with respect to a radial direction and a back yoke portion provided outside the permanent magnet part with respect to the radial direction, the permanent magnet part having a plurality of magnetic pole faces arranged in the circumferential direction on a surface of the permanent magnet part opposed to the stator, the rotor configured to be rotated along with rotation of the crankshaft, the plurality of detection object parts provided on an outer surface of the rotor and arranged at intervals with respect to the circumferential direction, each of the plurality of detection object parts extending from its forward end to its rearward end with respect to a direction of its movement along with rotation of the rotor;

a rotor position detection device arranged at a position allowed to be opposed to each of the plurality of detection object parts with an air gap therebetween during rotation of the rotor, the rotor position detection device including a detection-purpose winding provided separately from the stator winding, the detection-purpose winding configured such that an of the detection object part makes it easy that a variation in the current supplied to the stator windings is precisely adapted to rotation of the rotor. Particularly at a time of engine start, the rotation speed of the rotor is low, At this time, followability of rotation of the rotor can be improved by the precise control using both of the signal variations corresponding to the forward and rearward ends. This makes it possible that, for example, a cycle of performing on/off operation of the switching part be shortened at an early stage, to accelerate rotation of the rotor at an early stage.

In addition, for example, using both of the signal variations corresponding to the forward and rearward ends of the detection object part also allows desynchronization (step out) of the rotor to be detected at an early stage. In a case of desynchronization of the rotor, therefore, a control of the current supplied to the stator winding can be redone at an early stage. The redoing at the early stage improves the followability of rotation of the rotor.

The present teaching is a teaching accomplished based on the findings described above.

To solve the problems described above, the present invention provide an engine unit according to claim 1. Preferred embodiments are defined in the dependent claims. The teaching adopts the following configurations.

(1) An engine unit mountable to a straddled vehicle, the engine unit including:

a four-stroke engine body in which a high-load region and a low-load region occur during four strokes in a state where combustion is stopped, the high-load region having a high load on rotation of the crankshaft, the low-load region having a lower load on rotation of the crankshaft than that of the high-load region;

a starter motor including a stator, a rotor, and a plurality of detection object parts, the stator having a stator core that is provided with a plurality of teeth arranged at intervals with respect to a circumferential direction and multi-phase stator windings that are wound on the plurality of teeth, the rotor having a permanent magnet part provided outside the stator with respect to a radial direction and a back yoke portion provided outside the permanent magnet part with respect to the radial direction, the permanent magnet part having a plurality of magnetic pole faces arranged in the circumferential direction on a surface of the permanent magnet part opposed to the stator, the rotor configured to be rotated along with rotation of the crankshaft, the plurality of detection object parts provided on an outer surface of the rotor and arranged at intervals with respect to the circumferential direction, each of the plurality of detection object parts extending from its forward end to its rearward end with respect to a direction of its movement along with rotation of the rotor;

a rotor position detection device arranged at a position allowed to be opposed to each of the plurality of detection object parts with an air gap therebetween during rotation of the rotor, the rotor position detection device including a detection-purpose winding provided separately from the stator winding, the detection-purpose winding configured such that an electrical signal flows therethrough, the electrical signal exhibiting different waveforms between when corresponding to the forward end and when corresponding to the rearward end, the difference caused due to a magnetic state change caused by movement of the plurality of detection object parts;

an inverter connected to the multi-phase stator windings and including a plurality of switching parts that control, by on/off-operation thereof, a current flowing between the multi-phase stator windings and a battery; and

a control device that controls an operation of the starter motor by controlling the plurality of switching parts, the control device configured to shift from a start control mode to an acceleration control mode, the start control mode being a mode for performing on/off-operation of the plurality of switching parts at predefined timings in a state where the crankshaft is stopped such that a current is supplied to the multi-phase stator windings to start forward rotation of the crankshaft, the acceleration control mode being a mode for performing on/off-operation of the plurality of switching parts at timings based on an electrical signal flowing in the detection-purpose winding of the rotor position detection device such that a current is supplied to the multi-phase stator windings to accelerate forward rotation of the crankshaft, the electrical signal varying due to a magnetic state change caused by movement of the plurality of detection object parts along with forward rotation of the crankshaft, the control device configured to cause rotation of the rotor to follow a variation in a current flowing in the multi-phase stator windings by controlling on/off-operation of the plurality of switching parts based on both a timing of a variation corresponding to the forward end of the detection object part and a timing of a variation corresponding to the rearward end of the detection object part among variations in the electrical signal flowing in the detection-purpose winding in at least part of a time period during which at least one of the start control mode and the acceleration control mode is performed.

The engine unit of (1) includes a four-stroke engine body, a starter motor, a rotor position detection device, an inverter, and a control device. The four-stroke engine body has a high-load region and a low-load region during four strokes. A rotor of the starter motor is rotated along with rotation of a crankshaft of the four-stroke engine body. A stator core of the starter motor has teeth on which multi-phase stator windings are wound. A plurality of switching parts of the inverter are configured to, through on/off-operation thereof, selectively allow or block the passing of a current between the multi-phase stator windings and a battery. This is how the control device controls rotation of the rotor of the starter motor.

a plurality of detection object parts are provided on an outer surface of the rotor. Each of the detection object parts has a forward end and a rearward end. The rotor position detection device is arranged at a position allowed to be opposed to each of the plurality of detection object parts with an air gap therebetween during rotation of the rotor. The rotor position detection device includes a detection-purpose winding provided separately from the stator winding. The detection-purpose winding allows an electrical signal to flow therethrough when opposed to the plurality of detection object parts during rotation of the rotor. The electrical signal contains a variation corresponding to the forward end of the detection object part and a variation corresponding to the rearward end of the detection object part. The control device causes rotation of the rotor to follow a variation in a current flowing in the multi-phase stator windings by controlling on/off-operation of the switching parts based on both a timing of a variation corresponding to the forward end of the detection object part and a timing of a variation corresponding to the rearward end of the detection object part.

The control device shifts from a start control mode to an acceleration control mode. In the start control mode, the control device performs on/off-operation of the switching parts at predefined timings such that a current is supplied to the multi-phase stator windings to start forward rotation of the crankshaft from its stopped state. In the acceleration control mode, the control device performs on/off-operation of the switching parts at timings based on an electrical signal flowing in the detection-purpose winding such that a current is supplied to the multi-phase stator windings to accelerate forward rotation of the crankshaft.

The control device controls on/off-operation of the switching parts based on both a timing of a variation corresponding to the forward end and a timing of a variation corresponding to the rearward end among variations in the electrical signal. Among variations in the electrical signal flowing in the detection-purpose winding, a variation corresponding to the forward end and a variation corresponding to the rearward end are detected as different types of variations. A variation corresponding to the forward end and a variation corresponding to the rearward end is easily distinguished from each other. It is therefore possible that a control at a timing of a variation corresponding to the rearward end is performed distinctively from a control at a timing of a variation corresponding to the forward end. For example, as for a control of a current variation in the stator winding, a control at a timing of a variation corresponding to the rearward end can be applied to a control in a phase different from that for the forward end. As a result, the control device is able to control the switching parts at a timing of a variation in the electrical signal corresponding to each of the forward and rearward ends. The switching parts are controlled with a high accuracy.

The control with a high accuracy improves followability of rotation of the rotor to a current supplied to the stator windings. Particularly when the rotation speed of the rotor is low at a time of engine start, the current supplied to the stator windings is controlled with a high accuracy based on signal timings corresponding to both of the forward and rearward ends, which improves the followability of rotation of the rotor. Thus, the rotor is likely to follow even though a cycle of variation in the current supplied to the stator windings is shortened at an early stage for the purpose of increasing the rotation speed of the starter motor at an early stage. Accordingly, rotation of the crankshaft can be accelerated at an early stage.

As a result, in a four-stroke engine body having a high-load region and a low-load region and having such characteristics that a torque required for rotating a crankshaft largely varies, it is easy for the crankshaft to overcome a load in the high-load region in a shorter time.

The electrical signal containing both a variation corresponding to the forward end and a variation corresponding to the rearward end is outputted from a single rotor position detection device. This enables a control to be performed with a high accuracy while suppressing an increase in the number of component parts.

Accordingly, the configuration of (1) is able to improve early-start ability of the engine while suppressing a deterioration in mountability to vehicle.

(2) The engine unit of (1), in which

in at least part of a time period during which the acceleration control mode is performed, the control device performs on/off-operation of the plurality of switching parts so as to control a current flowing in the stator winding such that a variation in the current is repeated, and performs on/off-operation of the plurality of switching parts so as to correct a variation phase of the current at both a timing of a variation corresponding to the forward end of the detection object part and a timing of a variation corresponding to the rearward end of the detection object part among variations in the electrical signal flowing in the detection-purpose winding.

In the configuration of (2), among variations in the electrical signal flowing in the detection-purpose winding, a variation corresponding to the forward end and a variation corresponding to the rearward end are detected as different types of variations. It is easy to distinguish an electrical signal variation corresponding to the forward end and an electrical signal variation corresponding to the rearward end from each other. It is therefore possible that, in phases of the variation in the current flowing in the stator winding, a phase in a region corresponding to the forward end is corrected at a timing of a variation corresponding to the forward end of the detection object part, while in phases of the variation in the current flowing in the stator winding, a phase in a region corresponding to the rearward end is corrected with a high accuracy at a timing of a variation corresponding to the forward end of the detection object part.

In a case of, for example, increasing the number of detection object parts provided in the rotor to increase the frequency of an electrical signal variation corresponding to one end of the detection object part, variations appear as the same type of variation. It is not easy to distinguish a region to which each variation is applied. It is therefore difficult to use these variations to correct the variation phase of the current flowing in the stator winding.

In this respect, the configuration of (2) enables the phase of the current flowing in the stator winding to be controlled more precisely by using both of the forward and rearward ends of the detection object part. Thus, rotation of the rotor is likely to follow even though a cycle of variation in the current flowing in the stator winding is shortened. Accordingly, the early-start ability of the engine is further improved.

(3) The engine unit of (1) or (2), in which

in at least part of at least one of time periods during which the start control mode and the acceleration control mode are performed, the control device performs on/off-operation of the plurality of switching parts so as to control a current flowing in the stator winding such that a cycle of variation in the current changes over time, and detects occurrence of desynchronization of the rotor by comparing, against a variation phase of the current flowing in the stator winding, both a timing of a variation corresponding to the forward end of the detection object part and a timing of a variation corresponding to the rearward end of the detection object part among variations in the electrical signal flowing in the detection-purpose winding.

The rotor, which is rotated along with rotation of the crankshaft, has a high load on rotation. Particularly in a four-stroke engine body having a high-load region and a low-load region, a load in the high-load region increases by a large increment. If desynchronization occurs, acceleration of rotation of the crankshaft cannot be continued easily. In the configuration of (3), among variations in the electrical signal flowing in the detection-purpose winding, a variation corresponding to the forward end of the detection object part and a variation corresponding to the rearward end of the detection object part are detected as different types of variations. It is easy to distinguish a variation corresponding to the forward end and a variation corresponding to the rearward end from each other. It is therefore possible to adopt distinct conditions in comparing, against a variation phase of the current flowing in the stator winding, both a timing of a variation corresponding to the forward end and a timing of a variation corresponding to the rearward end among variations in the electrical signal. This enables desynchronization of the rotor to be detected at an early stage.

(4) The engine unit of (3), in which

the control device detects occurrence of desynchronization of the rotor based on both: a result of comparison between a timing of a variation corresponding to the forward end of the detection object part among variations in the electrical signal and a forward end correspondence range which corresponds to the forward end in the variation phase of the current flowing in the stator winding; and a result of comparison between a timing of a variation corresponding to the rearward end of the detection object part among variations in the electrical signal and a rearward end correspondence range which corresponds to the rearward end in the variation phase of the current flowing in the stator winding, the rearward end correspondence range being different from the forward end correspondence range.

In the configuration of (4), a range of a current variation phase in the stator winding to be compared with a timing of a variation corresponding to the forward end among variations in the electrical signal is different from a range of a current variation phase in the stator winding to be compared with a timing of a variation corresponding to the rearward end among variations in the electrical signal. Of the current variation phase in the stator winding, different ranges are used for comparison with timings of variations in the electrical signal flowing in the detection-purpose winding. This enables desynchronization to be detected at an earlier stage.

(5) The engine unit of (3) or (4), in which

in a time period during which the start control mode is performed, the control device controls on/off-operation of the plurality of switching parts such that a cycle of variation in the current flowing in the stator winding is gradually shortened over time from a predefined initial cycle, and upon detection of occurrence of desynchronization of the rotor, controls the plurality of switching parts such that a variation in the current flowing in the stator winding is re-started from the initial cycle.

In the configuration of (5), upon detection of occurrence of desynchronization of the rotor, a variation in the current flowing in the stator winding is re-started from a predefined initial cycle. Accordingly, the early-start ability of the engine is further improved.

(6) The engine unit of any one of (1) to (5), in which

the rotor position detection device includes a core made of a magnetic material and having the detection-purpose winding wound thereon, the core having a detection end face that is opposed to each of the plurality of detection object parts with an air gap therebetween during rotation of the rotor, and

the plurality of detection object parts are formed such that the width of each of the detection object parts and the interval between the respective detection object parts with respect to the circumferential direction satisfy a relationship of (width of the detection object part) < (width of the interval between the detection object parts) < [(width of the detection object part) + (width of the detection end face)×2].

In the configuration of (6), a large change in the magnetic state starts at a timing when the detection object part and the detection end face start to overlap in the circumferential direction and at a timing when the overlap between the detection object part and the detection end face terminates. In the configuration of (6), for example, when the rotor is rotated at a constant speed, there is a small difference between the time interval from an electrical signal variation corresponding to the forward end to an electrical signal variation corresponding to the rearward end and the time interval from an electrical signal variation corresponding to the rearward end to an electrical signal variation corresponding to the forward end. This enables detection of desynchronization based on the electrical signal variations corresponding to the forward and rearward ends and correction of the current variation phase to be performed with a further high accuracy. Accordingly, the early-start ability of the engine is further improved.

(7) The engine unit of (6), in which

the plurality of detection object parts are formed such that the width of each of the detection object parts and the interval between the respective detection object parts with respect to the circumferential direction substantially satisfy a relationship of (width of the interval between the detection object parts) = (width of the detection object part) + (width of the detection end face).

In the configuration of (7), for example, when the rotor is rotated at a constant speed, the time interval from an electrical signal variation corresponding to the forward end to an electrical signal variation corresponding to the rearward end is substantially equal to the time interval from an electrical signal variation corresponding to the rearward end to an electrical signal variation corresponding to the forward end. This enables detection of desynchronization and correction of the current variation phase to be performed with a further high accuracy. Accordingly, the early-start ability of the engine is further improved.

(8) The engine unit of any one of (2) to (7), in which

in both the start control mode and the acceleration control mode, the control device causes a sinusoidal current to flow in the stator winding by performing on/off-operation of the plurality of switching parts with a cycle shorter than a cycle of variation in the current flowing in the stator winding.

In the configuration of (8), the current variation phase is corrected at both a timing of a variation corresponding to the forward end of the detection object part and a timing of a variation corresponding to the rearward end of the detection object part among variations in the electrical signal flowing in the detection-purpose winding. This enables the current flowing in the stator winding to be controlled precisely. The waveform of the current flowing in the stator winding is approximated to an ideal sinusoidal wave. As a result, efficient conversion of power into rotational power is enabled. A torque outputted from the starter motor increases. Accordingly, the early-start ability of the engine is further improved.

(9) A straddled vehicle including the engine unit of any one of (1) to (8).

The straddled vehicle of (9), which is equipped with the engine unit having early-start ability of the engine improved with suppression of deterioration in mountability to vehicle, is able to start running at an early stage.

The engine unit of the present teaching is mounted to a straddled vehicle. Examples of the straddled vehicle of the present teaching include motorcycles, motor tricycles, and ATVs (All-Terrain Vehicles).

The four-stroke engine body of the present teaching, in operation, repeats an intake stroke, a compression stroke, a combustion stroke (expansion stroke), and an exhaust stroke.

The starter motor of the present teaching includes a permanent magnet. The starter motor of the present teaching is a motor of radial gap type. The starter motor of the present teaching may function as a generator that is driven by the engine body. The starter motor of the present teaching includes a motor of interior permanent magnet type (IPM type) in which the permanent magnet of the rotor is embedded in a yoke, and a motor of surface permanent magnet type (SPM type) in which the permanent magnet is exposed from a yoke.

The starter motor of the present teaching includes the rotor that is rotated along with rotation of the crankshaft. The rotor may be attached to the crankshaft with interposition of a power transmission mechanism, for example. The rotor may be connected to the crankshaft with interposition of neither a variable ratio transmission nor a clutch, for example.

The inverter of the present teaching includes the plurality of switching parts by which a current flowing between the battery and the permanent magnet type rotary electric machine is controlled. The inverter includes a bridge inverter composed of a plurality of switching parts, for example. The switching parts are transistors, for example. The switching parts include FETs (Field Effect Transistors), thyristors, and IGBTs (Insulated Gate Bipolar Transistors), for example.

The detection object part of the present teaching is provided on the outer surface of the rotor. The detection object part may be made of a magnetic material such as iron, etc. The detection object part is, for example, a portion formed so as to protrude from the outer surface of the rotor through a stamping process. In another example, the detection object part may be a magnetic material piece attached to the rotor. The detection object part may be made of a permanent magnet, for example. The detection object part may be provided on a cylindrical portion of the rotor, for example. The detection object part may be provided on a disk-shaped portion of the rotor, for example.

The detection object parts have the same positional relationship relative to corresponding magnetic pole face pairs, for example. Each detection object part is arranged corresponding to a magnetic pole pair, and the relative positional relationship between each detection object part and the corresponding magnetic pole face pair is the same for the plurality of detection object parts.

The rotor position detection device of the present teaching includes the detection-purpose winding. The rotor position detection device includes a permanent magnet, for example. In this case, the rotor position detection device detects the detection object part based on magnetic effects involved in a change in magnetic resistance of a magnetic path that passes through the permanent magnet and the detection-purpose winding. It is not always necessary that the rotor position detection device includes a permanent magnet. The rotor position detection device may be a device configured such that the detection-purpose winding is always rendered conducting and a conduction current varies in accordance with a change in inductance caused by passing of the detection object part. It may be also possible that the rotor position detection device detects the detection object part based on magnetic effects involved in a change in magnetic fluxes received from a permanent magnet which acts as the detection object part. In the present teaching, the electrical signal flowing in the detection-purpose winding varies in accordance with the forward and rearward ends of the detection object part.

The control device of the present teaching includes one rotor position detection device. The present teaching, however, is also applicable to a configuration having two or more rotor position detection devices, for example.

A state where rotation of the rotor follows a vary in the current flowing in the multi-phase stator windings means a state where the rotor is rotated along with rotation of a magnetic field caused by a variation in the current flowing in the stator windings. The state where rotation of the rotor follows a current variation includes, for example, a state where rotation of the rotor is in synchronization with a current variation. The state where rotation of the rotor is in synchronization with a current variation means a state where the relationship between a current variation phase and the rotation position of the rotor are within a limited range. The state where rotation of the rotor follows a current variation is not limited to the state where they are in synchronization for example, but includes a state where the rotor is rotated through a certain angle in one cycle of the current variation. The state where rotation of the rotor follows a current variation includes a state where, when the rotor is desynchronized (steps out), a current variation is redone for rotation so that the rotor is rotated. Desynchronization (step out) of the rotor includes a state where the angle through which the rotor is rotated in one cycle of the current variation is less than a certain angle. Desynchronization of the rotor includes a state where, for example, rotation of the rotor is stopped irrespective of a current variation. Desynchronization of the rotor includes a state where the rotor makes reverse rotation.

For example, the control device of the present teaching may control on/off-operation of the switching parts based on both a timing of a variation corresponding to the forward end and a timing of a variation corresponding to the rearward end in both of time periods during which the start control mode and the acceleration control mode are performed. Alternatively, the control device may control on/off-operation of the switching parts based on both a timing of a variation corresponding to the forward end and a timing of a variation corresponding to the rearward end in a time period during which only either one of the start control mode and the acceleration control mode is performed. Alternatively, the control device may control on/off-operation of the switching parts based on both a timing of a variation corresponding to the forward end and a timing of a variation corresponding to the rearward end in part of a time period during which the start control mode is performed. Alternatively, the control device may control on/off-operation of the switching parts based on both a timing of a variation corresponding to the forward end and a timing of a variation corresponding to the rearward end throughout a time period during which the start control mode is performed. Alternatively, the control device may control on/off-operation of the switching parts based on both a timing of a variation corresponding to the forward end and a timing of a variation corresponding to the rearward end in part of a time period during which the acceleration control mode is performed. Alternatively, the control device may control on/off-operation of the switching parts based on both a timing of a variation corresponding to the forward end and a timing of a variation corresponding to the rearward end throughout a time period during which the acceleration control mode is performed.

In the present teaching, the current variation phase means the position within one cycle of the current which repeatedly varies. The phase is expressed in the form of the angle from a certain reference point in one cycle of the repetition, the one cycle corresponding to 360 degrees. Adjusting or correcting the phase means displacing, on the time axis, a waveform of a current or voltage that repeatedly varies relative to a waveform of a cycle that would be obtained if the cycle before the adjustment or correction continued.

The forward end correspondence range and the rearward end correspondence range are ranges of the current variation phase predefined as a reference for detecting desynchronization.

In the present teaching, the rearward end correspondence range is a range different from the forward end correspondence range. It, however, may be acceptable that the rearward end correspondence range and the forward end correspondence range partially overlap. It may be also acceptable that the rearward end correspondence range and the forward end correspondence range do not overlap at all.

The control device may perform such a control as to cause a sinusoidal current to flow in the stator windings by performing on/off-operation of the switching parts, for example. The control device may perform such a control as to cause a square-wave current to flow in the stator windings by performing on/off-operation of the switching parts, for example. In a case of, for example, performing such a control as to cause a square-wave current to flow in the stator windings, the control device performs on/off-operation of the plurality of switching parts at timings based on a 120-degree conduction scheme. The 120-degree conduction scheme is a scheme in which a pause in conduction is provided in each phase of the multi-phase stator windings and intermittent conduction is performed with a conduction angle of less than 180 degrees.

In a case of performing such a control as to cause a sinusoidal current to flow in the stator windings, for example, the control device performs on/off-operation of the switching parts with a duty that varies in the shape of a sinusoidal wave over time. Such a control as to cause a sinusoidal current to flow in the stator windings is based on a 180-degree conduction scheme. In a case of performing such a control as to cause a sinusoidal current to flow in the stator windings, for example, the control device may perform on/off-operation of the plurality of switching parts at timings based on a vector control scheme.

[EFFECTS OF THE INVENTION]

The present teaching provides improvement in early-start ability of an engine while suppressing deterioration in mountability of the engine to a vehicle.

[BRIEF DESCRIPTION OF THE DRAWINGS]

FIG. 1 is a partial cross-sectional view schematically showing an outline configuration of an engine unit according to an embodiment of the present teaching.
FIG. 2 is an illustrative diagram schematically showing the relationship between a crank angle position and a required torque at a time of engine start.
FIG. 3 is a cross-sectional view of a starter motor shown in FIG. 1, as sectioned perpendicular to its rotation axis line.
FIG. 4(A) shows, on an enlarged scale, a part of a rotor position detection device and a part of a rotor when a detection object part and a detection end face start to overlap in a circumferential direction; and FIG. 4(B) shows, on an enlarged scale, a part of the rotor position detection device and a part of the rotor when the overlap between the detection object part and the detection end face in the circumferential direction terminates.
FIG. 5 is a block diagram showing a basic electrical configuration of the engine unit shown in FIG. 1.
FIG. 6 shows graphs of an electrical signal flowing in a detection-purpose winding and an output signal of a both edge detection unit.
FIG. 7 is a flowchart illustrating an operation of the engine unit shown in FIG. 5.
FIG. 8 is a flowchart illustrating an operation of the engine unit, the operation following a control shown in FIG. 7.
FIG. 9 contains graphs illustrating an exemplary relationship between an electrical angle and the duty of switching parts.
FIG. 10(A) is a graph schematically showing a variation in a current flowing in the stator windings; FIG. 10(B) shows a first positional relationship between the rotor and a stator; FIG. 10(C) shows a second positional relationship between the rotor and the stator;

FIG. 10(D) shows a third positional relationship between the rotor and the stator; and FIG. 10(E) shows a fourth positional relationship between the rotor and the stator.

FIG. 11 shows the positional relationship between the rotor and the stator when desynchronization is occurring.

FIG. 12 is a timing chart showing exemplary current and voltage at a time of starting an engine body.

FIG. 13 shows an external appearance of a straddled vehicle equipped with the engine unit.

[EMBODIMENTS FOR CARRYING OUT THE INVENTION]

Hereunder, the present teaching is described based on preferred embodiments with reference to the drawings.

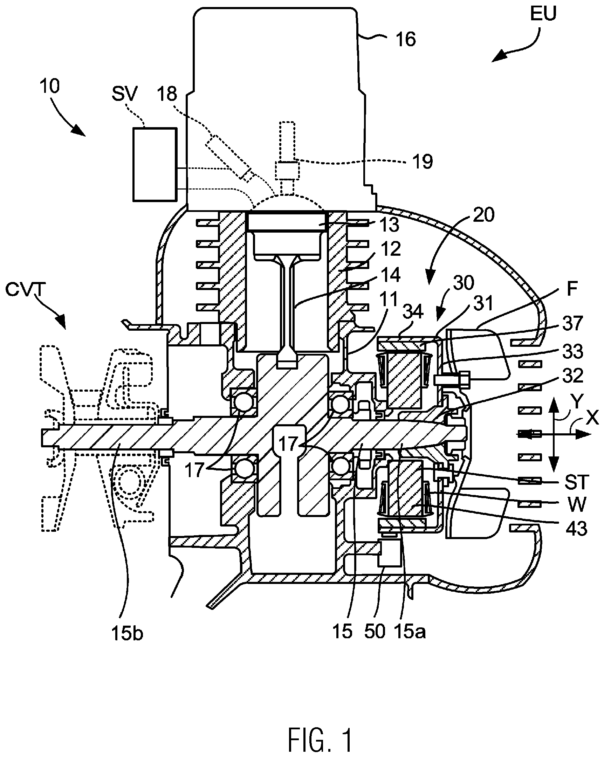

FIG. 1 is a partial cross-sectional view schematically showing an outline configuration of an engine unit EU according to an embodiment of the present teaching. The engine unit EU of this embodiment is a four-stroke engine unit for use in vehicle.

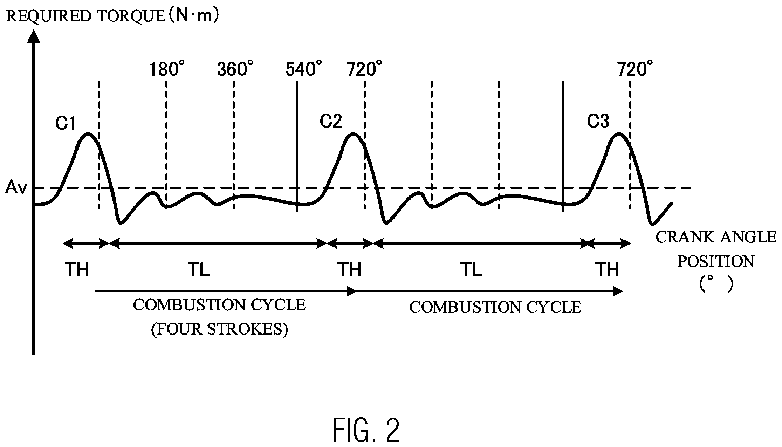

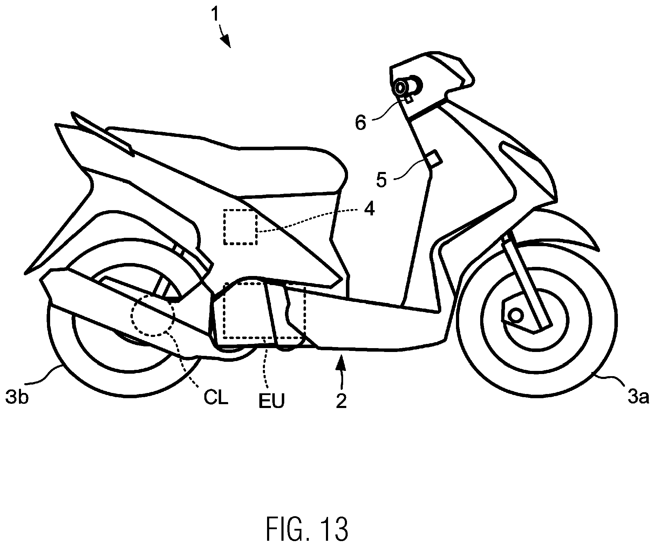

The engine unit EU is a unit mounted to a straddled vehicle 1 (see FIG. 13), for example. The engine unit EU includes a four-stroke engine body 10 and a starter motor 20. The four-stroke engine body 10 is a single-cylinder four-stroke engine including one cylinder. Hereinafter, the four-stroke engine body is simply referred to as an engine body. In the engine body 10, the relationship shown in FIG. 2 is established between a crank angle position and a required torque. The required torque means a torque required for rotating a crankshaft 15.

FIG. 2 is an illustrative diagram schematically showing the relationship between the crank angle position and the required torque at a time of engine start. The relationship between the crank angle position and the required torque shown in FIG. 2 is under a state where combustion is stopped.

The engine body 10 has, during four strokes, a high-load region TH in which a high load is put on rotation of the crankshaft 15 and a low-load region TL in which a load put on rotation of the crankshaft 15 is lower than that of the high-load region TH. The high-load region means a region in one combustion cycle of the engine body 10 where a load torque is higher than an average value Av of the load torque over the one combustion cycle. From the viewpoint of the rotation angle of the crankshaft 15, the low-load region TL is equal to or wider than the high-load region TH. To be specific, the low-load region TL is wider than the high-load region TH. In other words, a rotation angle region corresponding to the low-load region TL is wider than a rotation angle region corresponding to the high-load region TH. During rotation, the engine body 10 repeats four strokes, namely, an intake stroke, a compression stroke, an expansion stroke, and an exhaust stroke. The compression stroke overlaps the high-load region TH.

One combustion cycle of the engine body 10 includes one intake stroke, one compression stroke, one expansion stroke, and one exhaust stroke.

As shown in FIG. 1, the engine unit EU includes the starter motor 20. The starter motor 20 is a three-phase brushless motor. At a time of engine start, the starter motor 20 starts the engine body 10 by driving the crankshaft 15 in forward rotation.

The starter motor 20 is attached to the crankshaft 15 of the engine body 10. In this embodiment, the starter motor 20 is attached to the crankshaft 15 without interposition of a power transmission mechanism (such as a belt, a chain, a gear, a speed reducer, or a speed increaser). In the present teaching, the starter motor 20 is configured such that forward rotation of the starter motor 20 causes forward rotation of the crankshaft 15. In the present teaching, it is preferable that the rotation axis line of the starter motor 20 is substantially coincident with the rotation axis line of the crankshaft 15. It is also preferable that the starter motor 20 is attached to the crankshaft 15 without interposition of any power transmission mechanism, as illustrated in this embodiment.

The engine body 10 includes a crank case 11, a cylinder 12, a piston 13, a connecting rod 14, and the crankshaft 15. The piston 13 is arranged in the cylinder 12 such that the piston 13 is freely movable to and fro.

The crankshaft 15 is rotatably arranged in the crank case 11. The connecting rod 14 connects the piston 13 and the crankshaft 15 to each other. A cylinder head 16 is attached to an upper portion of the cylinder 12. The cylinder 12, the cylinder head 16, and the piston 13 define a combustion chamber. The crankshaft 15 is supported on the crank case 11 via a pair of bearings 17 in a freely rotatable manner. The starter motor 20 is attached to one end portion 15a of the crankshaft 15. A transmission CVT is attached to the other end portion 15b of the crankshaft 15. The transmission CVT changes the gear ratio which is the ratio of an output rotation speed to an input rotation speed.

The engine unit EU is provided with a throttle valve SV and a fuel injector device 18. The throttle valve SV adjusts the amount of air to be supplied to the combustion chamber. The degree of opening of the throttle valve SV is adjusted in accordance with an operation on an acceleration operator, for example. The fuel injector device 18 injects a fuel, to supply the fuel to the combustion chamber. The engine body 10 has a spark plug 19.

The engine body 10 outputs rotational power through the crankshaft 15. The rotational power of the crankshaft 15 is transmitted to a wheel 3b (see FIG. 13) via the transmission CVT. The straddled vehicle 1 (see FIG. 13) is driven by the wheel 3b that receives the rotational power outputted from the engine body 10 through the crankshaft 15.

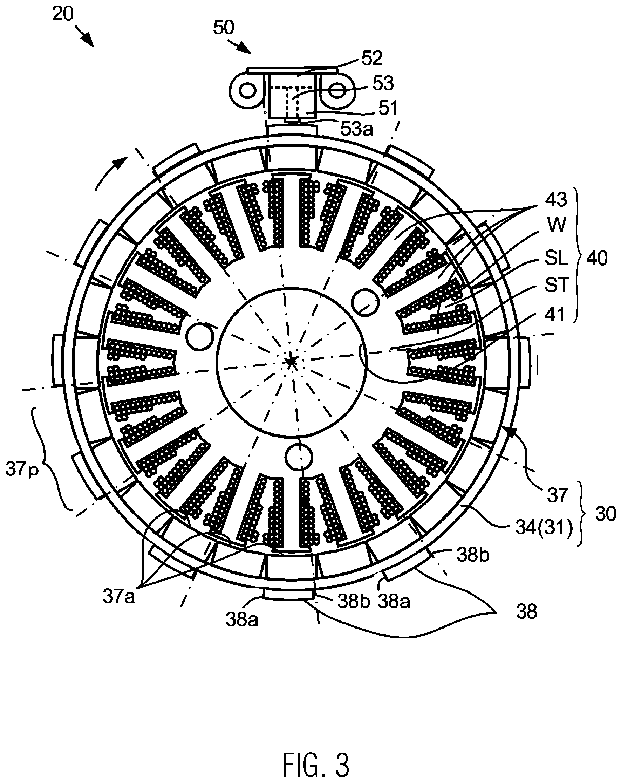

FIG. 3 is a cross-sectional view of the starter motor 20 shown in FIG. 1, as sectioned perpendicular to its rotation axis line. The starter motor 20 is described with reference to FIGS. 1 and 3.

The starter motor 20 is a three-phase brushless motor of permanent magnet type. The starter motor 20 of this embodiment is a motor of radial gap type. The starter motor 20 is a motor of outer rotor type.

The starter motor 20 includes a rotor 30 and a stator 40. The rotor 30 is an outer rotor. The stator 40 is an inner stator. The rotor 30 includes a rotor body part 31. The rotor body part 31 is made of, for example, a ferromagnetic material. The rotor body part 31 is in the shape of a cylinder with a bottom. The rotor body part 31 includes a cylindrical boss portion 32, a disk-shaped bottom wall portion 33, and a back yoke portion 34 having a cylindrical shape. The bottom wall portion 33 and the back yoke portion 34 are integrally formed. Here, it may also be acceptable that the bottom wall portion 33 and the back yoke portion 34 are formed as separate parts. The bottom wall portion 33 and the back yoke portion 34 are secured to the crankshaft 15 via the cylindrical boss portion 32. A winding to which a current is supplied is not provided in the rotor 30.

The rotor 30 includes a permanent magnet part 37. The rotor 30 includes a plurality of magnetic pole portions 37a. The plurality of magnetic pole portions 37a are formed by the permanent magnet part 37. The plurality of magnetic pole portions 37a are provided on an inner circumferential surface of the back yoke portion 34. In this embodiment, the permanent magnet part 37 includes a plurality of permanent magnets. The plurality of magnetic pole portions 37a are provided in the plurality of permanent magnets, respectively.

The permanent magnet part 37 may alternatively be configured as a single annular permanent magnet. In such a configuration, the single permanent magnet is magnetized such that the plurality of magnetic pole portions 37a appear side by side on the inner circumferential surface.

The plurality of magnetic pole portions 37a are provided such that N pole and S pole appear alternately with respect to the circumferential direction of the starter motor 20. In this embodiment, the number of magnetic poles of the rotor 30 opposed to the stator 40 is twenty-four. The number of magnetic poles of the rotor 30 means the number of magnetic poles opposed to the stator 40. No magnetic material is arranged between the magnetic pole portions 37a and the stator 40. The permanent magnets of the rotor 30 are opposed to the stator 40 with only an air gap therebetween. The magnetic pole portions 37a are provided outside the stator 40 with respect to the radial direction of the starter motor 20. The back yoke portion 34 is provided outside the magnetic pole portions 37a with respect to the radial direction. The number of magnetic pole portions 37a included in the starter motor 20 is more than the number of teeth 43.

A cooling fan F is provided to the bottom wall portion 33 of the rotor 30.

The stator 40 includes a stator core ST and a plurality of stator windings W. The stator core ST includes a plurality of teeth 43 arranged at intervals with respect to the circumferential direction. The plurality of teeth 43 integrally extend from the stator core ST toward radially outside. In this embodiment, eighteen teeth 43 in total are arranged at intervals with respect to the circumferential direction. In other words, the stator core ST has eighteen slots SL in total that are arranged at intervals with respect to the circumferential direction. The teeth 43 are arranged at equal intervals with respect to the circumferential direction.

The number of magnetic pole portions 37a included in the rotor 30 is more than the number of teeth 43. The number of magnetic pole portions 37a is equal to 4/3 of the number of slots.

The stator winding W is wound around each of the teeth 43. That is, the multi-phase stator windings W are arranged through the slots SL. In the state shown in FIG. 3, the stator windings W are in the slots SL. Each of the multi-phase stator windings W belongs to any of U-phase, V-phase, and W-phase. The stator windings W are arranged in the order of V-phase, U-phase, and W-phase, for example. A manner in which the stator winding W is wound may be, though not particularly limited, either concentrated winding or distributed winding, and it preferably is concentrated winding.

The starter motor 20 is connected to the crankshaft 15 of the engine body 10. The rotor 30 is connected to the crankshaft 15 such that the rotor 30 is rotated along with rotation of the crankshaft 15. More specifically, the rotor 30 is connected to the crankshaft 15 such that the rotor 30 is rotated with its speed ratio fixed relative to the crankshaft 15.

In this embodiment, the rotor 30 is attached to the crankshaft 15 without interposition of a power transmission mechanism (such as a belt, a chain, a gear, a speed reducer, or a speed increaser). The rotor 30 is rotated with a speed ratio of 1:1 relative to the crankshaft 15. The starter motor 20 is configured such that the rotor 30 is driven in forward rotation at a time of combustion operation of the engine body 10.

At a time of engine start, the starter motor 20 drives the crankshaft 15 in forward rotation to start the engine body 10.

The rotor 30 is described in more detail. The permanent magnet part 37 is provided outside the stator 40 with respect to the radial direction of the starter motor 20. The back yoke portion 34 is provided outside the permanent magnet part 37 with respect to the radial direction. The permanent magnet part 37 includes, on its surface facing the stator 40, a plurality of magnetic pole faces 37a. The magnetic pole faces 37a are arranged side by side in the circumferential direction of the starter motor 20. Each of the magnetic pole faces 37a has N pole or S pole. N pole and S pole are arranged alternately with respect to the circumferential direction of the starter motor 20. The magnetic pole faces 37a of the permanent magnet part 37 face the stator 40. In this embodiment, a plurality of magnets are arranged in the circumferential direction of the starter motor 20, and each of the plurality of magnets is disposed with its S pole and N pole lining up in the radial direction of the starter motor 20. One S pole and one N pole adjacent to each other with respect to the circumferential direction constitute a magnetic pole face pair 37p. The number of magnetic pole face pairs 37p is 1/2 of the number of magnetic pole faces 37a. In this embodiment, the rotor 30 includes twenty-four magnetic pole faces 37a which are opposed to the stator 40. The number of magnetic pole face pairs 37p included in the rotor 30 is twelve. In the figure, twelve magnetic pole face pairs 37p corresponding to twelve magnet pairs are shown. For clarity of the figure, however, only one pair 37p is given the reference sign. The number of magnetic pole faces 37a included in the starter motor 20 is more than 2/3 of the number of teeth 43. The number of magnetic pole faces 37a included in the starter motor 20 is equal to or more than 4/3 of the number of teeth 43.

The rotor 30 includes, on its outer surface, a plurality of detection object parts 38 for detection of the rotation position of the rotor 30. Magnetic effects are used to detect the plurality of detection object parts 38. The plurality of detection object parts 38 arranged at intervals with respect to the circumferential direction are provided on the outer surface of the rotor 30. In this embodiment, the plurality of detection object parts 38 are provided on an outer circumferential surface of the rotor 30 at intervals with respect to the circumferential direction. The plurality of detection object parts 38 are arranged on an outer circumferential surface of the back yoke portion 34 having a cylindrical shape. Each of the plurality of detection object parts 38 protrudes from the outer circumferential surface of the back yoke portion 34, outward with respect to the radial direction Y of the starter motor 20. The widths of the plurality of detection object parts 38 are equal with respect to the circumferential direction. Each of the plurality of detection object parts 38 has a shape extending from its forward end 38a to its rearward end 38b with respect to the circumferential direction. The bottom wall portion 33, the back yoke portion 34, and the detection object parts 38 are integrally formed by, for example, stamping a metal plate such as an iron plate. Thus, the detection object parts 38 are made of a ferromagnetic material. A detailed description of how the detection object parts 38 are arranged is given later.

The engine unit EU is provided with a rotor position detection device 50. The rotor position detection device 50 is a device that detects the position of the rotor 30. The rotor position detection device 50 is provided at a position allowed to be opposed to the plurality of detection object parts 38. The rotor position detection device 50 is not simultaneously opposed to the plurality of detection object parts 38, but is opposed to one after another of the plurality of detection object parts 38. That is, the rotor position detection device 50 is arranged at such a position that the plurality of detection object parts 38 sequentially comes into opposition against the rotor position detection device 50. The rotor position detection device 50 is opposed to a path through which the detection object parts 38 pass along with rotation of the rotor 30. The rotor position detection device 50 is arranged at a position distant from the stator 40. In this embodiment, the rotor position detection device 50 is arranged such that the back yoke portion 34 and the permanent magnet part 37 of the rotor 30 are located between the rotor position detection device 50 and the stator 40 with the stator windings W with respect to the radial direction of the crankshaft 15. The rotor position detection device 50, which is arranged outside the rotor 30 with respect to the radial direction of the starter motor 20, is oriented to the outer circumferential surface of the rotor 30.

The rotor position detection device 50 includes a detection-purpose winding 51. The detection-purpose winding 51 is a winding provided independently of the stator windings W of the stator 40. The stator windings W are supplied with a current for driving the rotor 30 of the starter motor 20 by an electromagnetic force, whereas the detection-purpose winding 51 is not supplied with the current for driving the rotor 30 of the starter motor 20. The stator windings W produce magnetic fluxes for driving the rotor 30, whereas the detection-purpose winding 51 does not produce any magnetic flux for driving the rotor 30. The rotor position detection device 50 has a higher heat resistance than a Hall IC or an MR sensor which uses a semiconductor device to detect the position. This can eliminate the need to provide a special heat shield structure for protecting the semiconductor device from engine heat.

An electrical signal flowing in the detection-purpose winding 51 varies as a magnetic state changes due to movement of the plurality of detection object parts 38 along with rotation of the crankshaft 15. The rotor position detection device 50 also includes a detection-purpose magnet 52 and a core 53. The core 53 is an elongated rod-like member made of, for example, iron. The detection-purpose winding 51 is wound on the core 53. The detection-purpose magnet 52 is provided at one end of the core 53. The core 53 has, at the other end thereof, a detection end face 53a. The detection end face 53a, during rotation of the rotor 30, comes into opposition against each of the plurality of detection object parts 38 with an air gap therebetween. The detection-purpose winding 51 functions as a pick-up coil that detects the detection object parts 38.

As the rotor 30 rotates, the detection object parts 38 provided on the outer circumferential surface of the back yoke portion 34 come close to or away from the core 53, and at that time, a magnetic flux linked with the detection-purpose winding 51 is changed. In accordance with this change, a voltage generated by an electromotive force occurring in the detection-purpose winding 51 varies. As a result, an electrical signal according to the detection-purpose winding 51 flows in the detection-purpose winding 51.

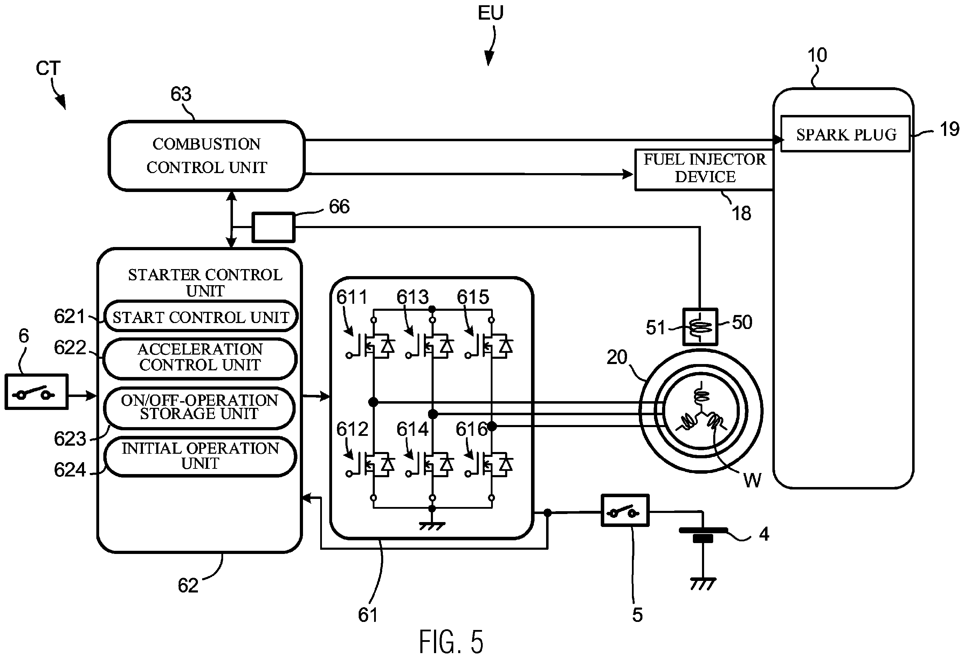

With this mechanism, the detection-purpose winding 51 magnetically detects the detection object parts 38. The detection-purpose winding 51 detects the detection object parts 38 after rotor 30 starts rotation. In other words, the rotor position detection device 50 starts to detect the rotation position of the rotor 30, after the crankshaft 15 starts rotation. During rotation of the rotor 30, the rotor position detection device 50 magnetically detects the detection object parts 38 one after another by the detection-purpose winding 51. More specifically, the rotor position detection device 50 detects the opposite ends of each detection object part 38 with respect to the circumferential direction, that is, the forward end 38a and the rearward end 38b. The detection-purpose winding 51 of the rotor position detection device 50 outputs an electrical signal to a control device CT (see FIG. 5).

Here, referring to FIG. 3, a description is given of arrangement of the detection object parts 38 of the rotor 30. In this embodiment, the plurality of detection object parts 38 are provided on the outer surface of the rotor 30, and the positions of the plurality of detection object parts 38 have substantially the same positional relationship relative to the corresponding magnetic pole face pairs 37p, respectively. Thus, the forward ends 38a of the plurality of detection object parts 38 are arranged at positions having substantially the same positional relationship relative to the corresponding magnetic pole face pairs 37p, respectively, and the rearward ends 38b of the plurality of detection object parts 38 are arranged at positions having substantially the same positional relationship relative to the corresponding magnetic pole face pairs 37p, respectively. Here, the position of the forward end 38a and the position of the rearward end 38b have different positional relationships relative to the corresponding magnetic pole face pair 37p.

In FIG. 3, the dashed and dotted lines indicate specified positions with respect to the circumferential direction, which are defined in advance. Each of the specified positions is a position in the magnetic pole face pair 37p including two magnetic poles (S pole and N pole) adjacent to each other with respect to the circumferential direction. The specified positions are substantially identical in terms of their locations in corresponding ones of the plurality of magnetic pole faces pairs 37p. The specified positions represent substantially the same electrical angle phase in corresponding ones of the magnetic pole face pairs 37p. The electrical angle is a rotation angle based on a cycle of repetition of the magnetic pole face pair 37p. The entirety of the magnetic pole face pair 37p corresponds to 360 degrees in electrical angle. Each of the plurality of detection object parts 38 is arranged at the specified position in each of the magnetic pole face pairs 37p. Since the plurality of detection object parts 38 have substantially the same positional relationship relative to the magnetic pole face pairs 37p, correlating a variation in the electrical signal in the detection-purpose winding 51 with the electrical angle of the starter motor 20 is easy. To be specific, both an electrical signal variation corresponding to the forward end 38a of the detection object part 38 and an electrical signal variation corresponding to the rearward end 38b thereof can be easily correlated with the electrical angle of the starter motor 20. As the specified position where the plurality of detection object parts 38 are arranged, positions other than the positions shown in FIG. 3, that is, positions offset from the positions indicated by the dashed and dotted lines in FIG. 3, can be employed as long as such positions have substantially the same positional relationship relative to the corresponding magnetic pole face pairs 37p of the plurality of detection object parts 38. As shown in FIG. 3, not all of the plurality of detection object parts 38 are arranged at equal intervals. There are positions (specified positions) located at equal intervals, and a position (blank position) having no detection object part 38 arranged therein.

In this embodiment, the plurality of detection object parts 38 provided on the outer surface of the rotor 30 are at angular intervals of [360 degrees / (a positive divisor of the number of magnetic pole face pairs, the positive divisor greater than one)] with respect to the circumferential direction. The 360 degrees represent the mechanical angle. The rotor position detection device 50 is provided at a position allowed to be opposed to each of the plurality of detection object parts 38 during rotation of the rotor 30. The plurality of detection object parts 38 provided on the outer surface of the rotor 30 are at angular intervals of [360 degrees / (the positive divisor of the number of magnetic pole face pairs, the positive divisor greater than one)] with respect to the circumferential direction. In the example shown in FIG. 3, the number equal to the number of magnetic pole face pairs is selected as (the positive divisor of the number of magnetic pole face pairs, the positive divisor greater than one). Thus, more specifically, the plurality of detection object parts 38 provided on the outer surface of the rotor 30 are at angular intervals of [360 degrees / (the number of magnetic pole face pairs)] with respect to the circumferential direction. In the example shown in FIG. 3, the number of magnetic pole face pairs is twelve. The plurality of detection object parts 38 provided on the rotor 30 are at angular intervals of [360 degrees / 12]. The plurality of detection object parts 38 provided on the outer surface of the rotor 30 are at angular intervals of 30 degrees.

The specified positions indicated by the dashed and dotted lines in FIG. 3 represent angular intervals of 30 degrees. Since the plurality of detection object parts 38 are provided at angular intervals of [360 degrees / (the positive divisor of the number of magnetic pole face pairs, the positive divisor greater than one)] with respect to the circumferential direction, correlating a variation in the electrical signal in the detection-purpose winding 51 with the electrical angle of the starter motor 20 is easy.

In this embodiment, the rotor 30 is provided with eleven detection object parts 38, the number of which is one less than the number of the specified positions. The eleven detection object parts 38 are arranged at eleven of the twelve specified positions, respectively. That is, the plurality of detection object parts 38 provided on the outer surface of the rotor 30 are arranged at positions that are spaced by a plurality of substantially equal intervals and one interval different from the plurality of substantially equal intervals. The one interval different from the plurality of substantially equal intervals is wider than each of the plurality of intervals. The rotor position detection device 50 is provided at a position allowed to be opposed to the plurality of detection object parts 38 during rotation of the rotor 30. The plurality of detection object parts 38 are spaced by the plurality of equal intervals and the one different interval. In the example shown in FIG. 3, the eleven detection object parts 38 are arranged at positions that are spaced by a plurality of intervals of 30 degrees and one interval of 60 degrees which is different from the plurality of intervals of 30 degrees. That is, the plurality of (twelve) specified positions on the outer surface of the rotor 30 are at equal intervals or at substantially equal intervals with respect to the circumferential direction of the crankshaft 15. The angular interval between two detection object parts 38 that are arranged at, among the plurality of specified positions, the two specified positions each adjacent to the position (blank position) having no detection object part 38 arranged therein with respect to the circumferential direction is twice the angular interval between any of the other detection object parts 38. Since one of the intervals of the plurality of detection object parts 38 is different from the others, a reference position in one rotation of the crankshaft 15 can be detected.

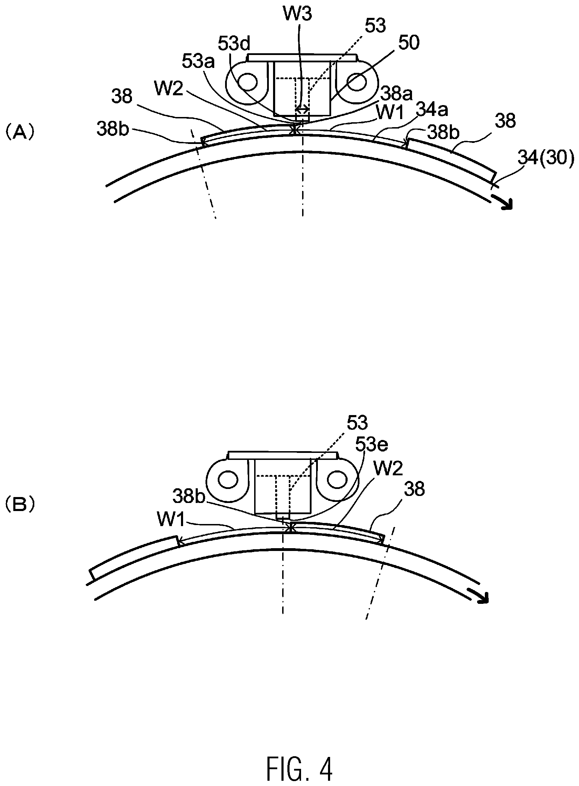

FIGS. 4(A) and 4(B) show a part of the rotor position detection device 50 and a part of the rotor 30 on an enlarged scale. FIG. 4(A) shows a state where the detection object part 38 and the detection end face 53a start to overlap in the circumferential direction. FIG. 4(B) shows a state where the overlap between the detection object part 38 and the detection end face 53a in the circumferential direction terminates.

FIG. 4(A) shows the back yoke portion 34 and the detection object parts 38 of the rotor 30. Each of the detection object parts 38 has the forward end 38a and the rearward end 38b. The forward end 38a and the rearward end 38b are ends of the detection object part 38 with respect to the circumferential direction. The forward end 38a is located forward with respect to a direction in which the detection object parts 38 move along with rotation of the rotor 30. The rearward end 38b is located rearward with respect to the direction in which the detection object parts 38 move.

As shown in FIG. 4(A), two detection object parts 38 adjacent to each other have an interval 34a therebetween.

With respect to the circumferential direction, a width W2 of the detection object part 38 and a width W1 of the interval 34a between the detection object parts 38 satisfy the following relationship:

(width W2 of the detection object part 38) < (width W1 of the interval 34a between the detection object parts) < [(width W2 of the detection object part 38) + (width W3 of the detection end face 53a)×2].

More specifically, the width W2 of the detection object part 38 and the width W1 of the interval 34a between the detection object parts 38 substantially satisfy the following relationship:

(width W1 of the interval 34a between the detection object parts) = (width W2 of the detection object part 38) + (width W3 of the detection end face 53a).

In the situation shown in FIG. 4(A), the forward end 38a of the detection object part 38 overlaps one end 53d of the detection end face 53a with respect to the circumferential direction. In the situation shown in FIG. 4(B), on the other hand, the rearward end 38b of the detection object part 38 overlaps the other end 53e of the detection end face 53a with respect to the circumferential direction.

The rotor position detection device 50 uses, for detection, a change in the magnetic flux linked with the detection-purpose winding 51 wound on the core 53. The magnetic flux changes in accordance with a change in the magnetic resistance of a magnetic path including the core 53. A change in the magnetic resistance of the magnetic path depends mainly on the shortest distance between the core 53 and the detection object part 38. The shortest distance between the core 53 and the detection object part 38 exhibits the greatest change in the situation shown in FIG. 4(A) and the situation shown in FIG. 4(B). In the situation shown in FIG. 4(A) and the situation shown in FIG. 4(B), the magnetic flux linked with the detection-purpose winding 51 exhibits the maximum change.

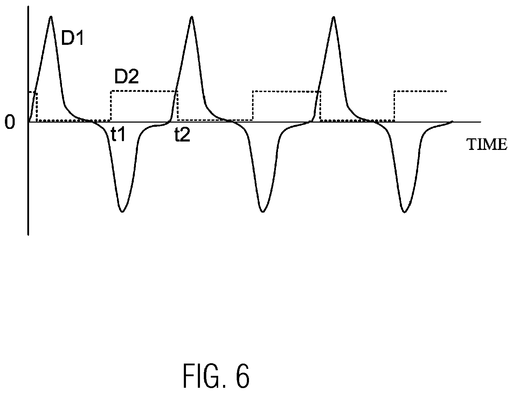

As shown in FIG. 4(A), at a time when the detection object part 38 and the detection end face 53a start to overlap in the circumferential direction, the electrical signal in the detection-purpose winding 51 varies in accordance with the forward end 38a of the detection object part 38 (see a signal D1 at time t1 in FIG. 6). As shown in FIG. 4(B), at a time when the overlap between the detection object part 38 and the detection end face 53a in the circumferential direction terminates, the electrical signal in the detection-purpose winding 51 varies in accordance with the rearward end 38b of the detection object part 38 (see the signal D1 at time t2 in FIG. 6). In the situation shown in FIG. 4(A), the forward end 38a of the detection object part 38 is detected. In the situation shown in FIG. 4(B), the rearward end 38b of the detection object part 38 is detected.

When considered based on the rotation angle of the rotor 30, a position where the electrical signal flowing in the detection-purpose winding 51 varies in accordance with the rearward end 38b of the detection object part 38 is approximated to the midpoint between the variations corresponding to two forward ends 38a adjacent to each other with the rearward end 38b interposed therebetween. For example, when the rotor 30 is rotated at a constant speed, the electrical signal flowing in the detection-purpose winding 51 has a small difference between the time interval from a signal variation corresponding to the forward end 38a to a signal variation corresponding to the rearward end 38b and the time interval from a signal variation corresponding to the rearward end 38b to a signal variation corresponding to the forward end 38a.

In more detail, the time interval from a signal variation corresponding to the forward end 38a to a signal variation corresponding to the rearward end 38b is substantially equal to the time interval from a signal variation corresponding to the rearward end 38b to a signal variation corresponding to the forward end 38a. In other words, the ratio between the time interval from a signal variation corresponding to the forward end 38a to a signal variation corresponding to the rearward end 38b and the time interval from a signal variation corresponding to the rearward end 38b to a signal variation corresponding to the forward end 38a is substantially 50:50. The time interval between a signal variation corresponding to the forward end 38a and a signal variation corresponding to the rearward end 38b is equalized. Detection of desynchronization or correction of the phase of a current variation, which will be described later, is performed based on a timing when the equalized time interval changes. This enables detection of desynchronization or correction of the phase of a current variation to be performed with an further high accuracy. As a result, early-start ability of the engine is further improved.

FIG. 5 is a block diagram showing a basic electrical configuration of the engine unit EU shown in FIG. 1.

The engine unit EU includes the engine body 10, the starter motor 20, the rotor position detection device 50, an inverter 61, and the control device CT. The spark plug 19 and a battery 4 are connected to the control device CT.

The engine unit EU includes the rotor position detection device 50 and the inverter 61.

The inverter 61 includes a plurality of switching parts 611 to 616. The inverter 61 includes six switching parts 611 to 616. The switching parts 611 to 616 constitute a three-phase bridge inverter. The plurality of switching parts 611 to 616, which are connected to the respective phases of the multi-phase stator windings W, selectively allow or block the passing of a current between the multi-phase stator windings W and the battery 4. More specifically, when the starter motor 20 functions as a starter motor, a current flowing in each of the multi-phase stator windings W is controlled based on on/off-operation of the switching parts 611 to 616.

Each of the switching parts 611 to 616 has a switching element. The switching element is, for example, a transistor and in more detail, an FET (Field Effect Transistor).

The control device CT includes a starter control unit 62, a combustion control unit 63, and a both edge detection unit 66.

The starter control unit 62 controls on/off-operation of each of the switching parts 611 to 616, to control the operation of the starter motor 20.

The starter control unit 62 includes a start control unit 621, an acceleration control unit 622, an on/off-operation storage unit 623, and an initial operation unit 624. The combustion control unit 63 and the starter control unit 62 including the start control unit 621 and the acceleration control unit 622 are implemented by a computer (not shown) and control software executable by the computer. Thus, below-described operations performed respectively by the combustion control unit 63 and the starter control unit 62 including the start control unit 621, the acceleration control unit 622, the on/off-operation storage unit 623, and the initial operation unit 624 can be considered as operations performed by the control device CT.

The combustion control unit 63 and the starter control unit 62 including the start control unit 621 and the acceleration control unit 622 may be partially or entirely implemented by a wired logic which is an electronic circuit. The starter control unit 62 and the combustion control unit 63 may be, for example, either configured as separate devices placed at a distance from each other, or integrated as a single device.

The on/off-operation storage unit 623 is formed of, for example, a memory. The on/off-operation storage unit 623 stores data relating to on/off-operation of the plurality of switching parts 611 to 616. To be more specific, the on/off-operation storage unit 623 stores a map of information used when the control device CT controls the starter motor 20 and the engine body 10, and software containing the information. The initial operation unit 624 is formed of an electronic circuit. The initial operation unit 624 generates an electrical signal for performing on/off-operation of the plurality of switching parts 611 to 616 when the crankshaft 15 is in a stopped state. The control device CT may concurrently operate both the on/off-operation storage unit 623 and the initial operation unit 624, or may operate one of the on/off-operation storage unit 623 and the initial operation unit 624.

The combustion control unit 63 controls injection of the fuel injector device 18, to control the combustion operation of the engine body 10. The combustion control unit 63 directs the spark plug 19 to perform an ignition operation, to control the combustion operation of the engine body 10.

A starter switch 6 for starting the engine body 10 is connected to the starter control unit 62. The starter switch 6 is actuated by the rider at a time of starting the engine body 10.

The both edge detection unit 66 detects variations in the electrical signal flowing in the detection-purpose winding 51 of the rotor position detection device 50, the variations corresponding to both the forward end 38a and the rearward end 38b of the detection object part 38. The both edge detection unit 66 is, for example, a waveform shaping circuit connected to the detection-purpose winding 51. The both edge detection unit 66 includes, for example, a circuit for differentiating the electrical signal flowing in the detection-purpose winding 51 and a circuit for limiting the amplitude thereof.

FIG. 6 shows graphs of an electrical signal flowing in the detection-purpose winding 51 and an output signal of the both edge detection unit 66. The horizontal axis of the graphs represents time elapse.

In FIG. 6, the solid line D1 indicates an electrical signal flowing in the detection-purpose winding 51 while the rotor 30 is rotating. At time t1, an electrical signal D1 flowing in the detection-purpose winding 51 exhibits a negative value. The negative value means a variation corresponding to the forward end 38a of the detection object part 38 (see FIG. 4). At time t2, the electrical signal D1 flowing in the detection-purpose winding 51 exhibits a positive value. The positive value means a variation corresponding to the rearward end 38b of the detection object part 38 (see FIG. 4).

The both edge detection unit 66 converts the electrical signal D1 into a binary output signal D2 which is easily identifiable by the starter control unit 62 and the combustion control unit 63. The both edge detection unit 66 outputs the output signal D2 corresponding to the electrical signal D1 flowing in the detection-purpose winding 51. The both edge detection unit 66 outputs a rising edge signal as a signal representing a variation corresponding to the forward end 38a of the detection object part 38. The both edge detection unit 66 outputs a falling edge signal as a signal representing a variation corresponding to the rearward end 38b of the detection object part 38. As a result of signal processing performed by the both edge detection unit 66, a gap is caused between a peak timing of the electrical signal D1 flowing in the detection-purpose winding 51 and an edge timing of the output signal D2. It, however, is easy to perform the processing in consideration of the gap, because the gap between the timings occurs in the same direction. Thus, the rising edge signal of the output signal D2 is treated substantially as a signal representing a variation corresponding to the forward end 38a of the detection object part 38. The falling edge signal of the output signal D2 is treated substantially as a signal representing a variation corresponding to the rearward end 38b of the detection object part 38.

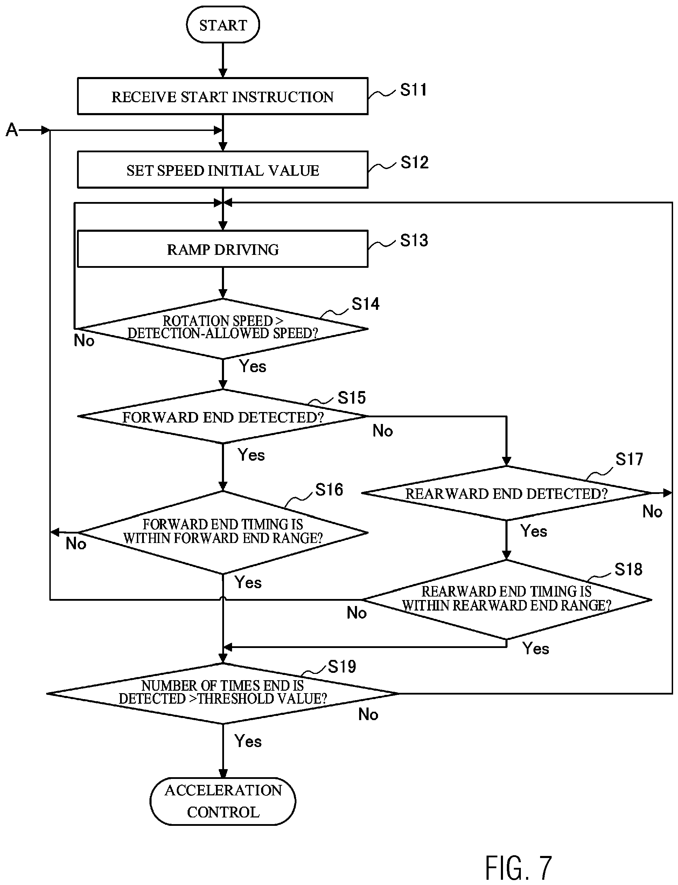

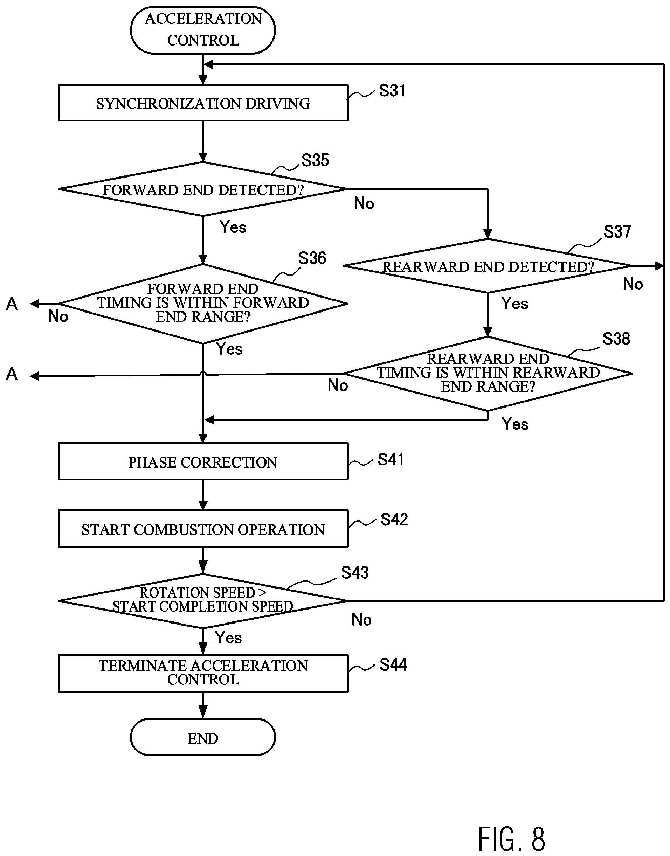

The starter control unit 62 and the combustion control unit 63 control on/off-operation of the switching parts 611 to 616, based on the variation corresponding to the forward end 38a of the detection object part 38 and the variation corresponding to the rearward end 38b of the detection object part 38, the variations included in the electrical signal D1 flowing in the detection-purpose winding 51. The starter control unit 62 and the combustion control unit 63, actually, control on/off-operation of the switching parts 611 to 616, based on the rising edge corresponding to the forward end 38a of the detection object part 38 and the falling edge corresponding to the rearward end 38b of the detection object part 38, the rising and falling edges included in the output signal D2 of the both edge detection unit 66. [Operation of Starting Engine Unit]FIGS. 7 and 8 are flowcharts illustrating operations of the engine unit EU shown in FIG. 5. The engine unit EU is controlled by the control device CT. FIG. 7 mainly shows a control in a start control mode. FIG. 8 shows a control following the control shown in FIG. 7. FIG. 8 mainly shows a control in an acceleration control mode.

First, an outline of the operation is described.

In response to reception of a start instruction under a state where rotation of the crankshaft 15 is stopped (S11), the control device CT directs the starter motor 20 to drive the crankshaft 15 in forward rotation. The control device CT thus starts the engine body 10.

In starting the engine body 10, the control device CT shifts from the start control mode (S12 to S19) in which forward rotation of the crankshaft 15 is started to the acceleration control mode (S31 to S43) in which forward rotation of the crankshaft 15 is accelerated. More specifically, the start control unit 621 (FIG. 5) executes rotation start processing (S12 to S19), and then the acceleration control unit 622 executes acceleration control processing (S31 to S43).

An operation in the start control mode is described with reference to FIG. 7.

When the start instruction is received (S11), the control device CT sets a speed initial value as a speed target value (S12). The speed initial value is a target value at a time point of starting rotation of the crankshaft 15. The speed target value is, for example, set to be "0" as the speed initial value.

Then, the control device CT controls ramp driving (S13). To be exact, the start control unit 621 of the starter control unit 62 controls the ramp driving.

In the ramp driving (S13), the control device CT performs on/off-operation of the plurality of switching parts 611 to 616 at predefined timings in the state where the crankshaft 15 is stopped. To be exact, the start control unit 621 performs on/off-operation of the plurality of switching parts 611 to 616 at predefined timings in the state where the crankshaft 15 is stopped. In this manner, the control device CT supplies a current to the multi-phase stator windings W, to start forward rotation of the crankshaft 15.

In the ramp driving (S13), the control device CT performs on/off-operation of the switching parts 611 to 616 based on an open-loop control. In other words, the control device CT sequentially renders the multi-phase stator windings W conducting at predefined timings, without performing a feedback control based on the position of the rotor 30. The control device CT does not bring the conduction of the stator windings W into synchronization with the position of the rotor 30.

The control device CT of this embodiment performs sine wave drive of the stator windings W. In the sine wave drive, the control device CT performs on/off-operation of the plurality of switching parts 611 to 616 such that a sinusoidal current flows in each stator winding W of the starter motor 20. The control device CT causes the sinusoidal current to flow in the stator windings W by dynamically changing the duty cycle of the switching parts 611 to 616 corresponding to the respective stator windings W. The control device CT causes the sinusoidal current to flow in the stator windings W by performing on/off-operation of the switching parts 611 to 616 with a cycle shorter than one cycle in electrical angle.

In detail, the control device CT includes an electrical angle counter indicating the electrical angle. The electrical angle represents the position of the rotor 30 based on the magnetic pole face pair 37p. The electrical angle is the rotation angle based on the cycle of repetition of the magnetic pole face pair 37p. The entirety of the magnetic pole face pair 37p corresponds to 360 degrees in electrical angle.

In the ramp driving (S13) in the start control mode, the control device CT increases an electrical angle counter value. For example, the control device CT repeatedly increases the electrical angle counter value from 0 to 360. The electrical angle counter value increases in the shape of a ramp.

In more detail, the control device CT increases the electrical angle counter value into a value corresponding to the speed target value. As the speed target value, the initial value is set in step S12 mentioned above. The control device CT increases the speed target value as time elapses. In the ramp driving (S13) in the start control mode, the speed target value does not reflect the actual rotation speed of the rotor 30. In the start control mode, the speed target value increases as time elapses, irrespective of the actual rotation speed of the rotor 30. In the start control mode, the speed target value is a target value of the rotation speed of the rotor 30.

As the electrical angle counter value increases into a value corresponding to the speed target value, the increment speed of the electrical angle counter also increases. Performing on/off-operation of the switching parts 611 to 616 with a duty cycle corresponding to the electrical angle counter value causes the current flowing in the stator windings W to vary. The cycle of variation is gradually shortened over time.

More specifically, the control device CT performs on/off-operation of the switching parts 611 to 616 in a duty cycle pattern corresponding to the electrical angle counter value. The pattern is, for example, a pattern in which paths of currents flowing in the stator windings W of U-phase, V-phase, and W-phase are sequentially switched. The control device CT performs on/off-operation of the switching parts 611 to 616 such that a sinusoidal current flows in the stator windings W, for example.

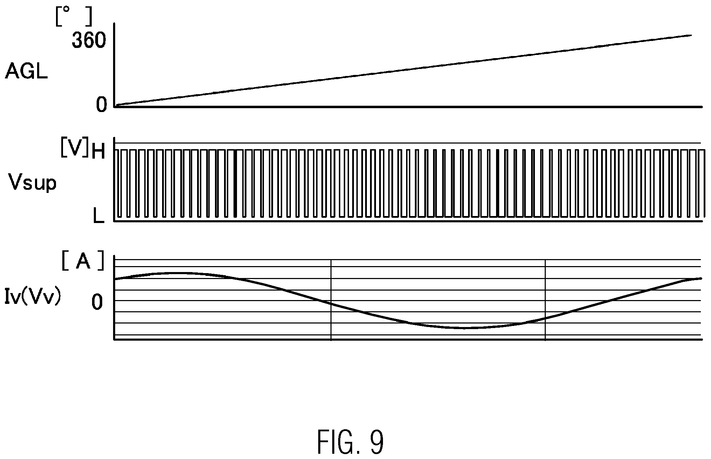

FIG. 9 contains graphs illustrating an exemplary relationship between the electrical angle and the duty of the switching parts 611 to 616.

FIG. 9 shows the correspondence relationship among the electrical angle AGL, an on/off-operation pattern Vsup of the V-phase switching part for example, and the current flowing in the stator windings W. On/off of the switching part represents the duty cycle. For example, the electrical angle AGL and the on/off-operation pattern are stored in association with the on/off-operation storage unit 623. The on/off-operation storage unit 623 stores such a duty cycle pattern that a sinusoidal voltage is generated in accordance with an increase in the electrical angle AGL.

The control device CT refers to the on/off-operation storage unit 623, to perform on/off-operation of the switching part with the duty corresponding to the electrical angle AGL. The on/off duty cycle of the switching part dynamically changes in accordance with an increase in the electrical angle (electrical angle counter value).

The control device CT causes a sinusoidal current to flow in the stator windings W by performing on/off-operation of the switching parts 611 to 616 with a cycle shorter than one cycle (360 degrees) in electrical angle.

The on/off-operation storage unit 623 stores U-phase and W-phase patterns in addition to the V-phase pattern.

This is how the control device CT supplies a current to the multi-phase stator windings W by performing on/off-operation of the plurality of switching parts 611 to 616 at predefined timings based on the data stored in the on/off-operation storage unit 623.

Causing the sinusoidal current to flow in the stator windings W enables efficient conversion of power into rotational power. As a result, the torque outputted from the starter motor 20 increases.

It may be possible that the control device CT performs on/off-operation of the switching parts 611 to 616 at predefined timings without reading out the data from the on/off-operation storage unit 623. For example, information about time and states of the plurality of switching parts may be included in the program of the control device CT. It may be possible that the control device performs on/off-operation of the plurality of switching parts at predefined timings by calculating a mathematical expression indicating a timing. It may be possible that the control device performs on/off-operation of the plurality of switching parts at predefined timings by using an electronic circuit (wired logic). For example, the initial operation unit 624 is an electronic circuit for generating a timing signal for performing on/off-operation of the switching parts 611 to 616. The initial operation unit 624 outputs a signal at a timing with its cycle shortened over time. The initial operation unit 624 may output a signal for performing on/off-operation of the plurality of switching parts 611 to 616. In other words, the control device CT may perform on/off-operation of the switching parts 611 to 616 at predefined timings based on the signal outputted from the initial operation unit 624.

In the ramp driving (S13) in the start control mode, the on/off state of the switching parts 611 to 616 and the on/off duty cycle are dynamically changed. The electrical angle (electrical angle counter value) based on which on/off-operation is performed, however, does not reflect actual rotation of the rotor 30. The on/off-operation timings of the switching parts 611 to 616 are defined irrespective of the position information of the rotor 30. Thus, the switching parts 611 to 616 are operated at predefined timings.

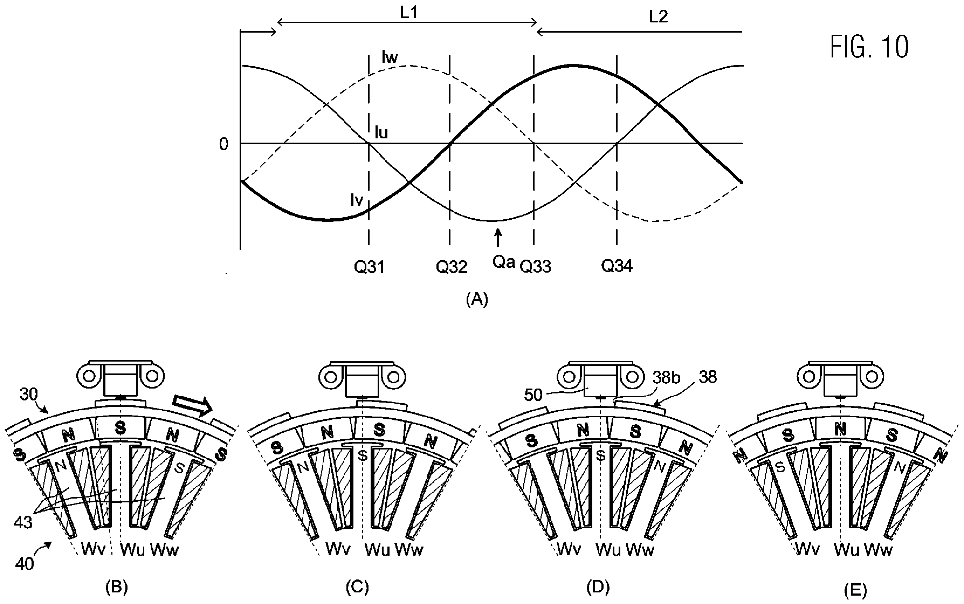

FIG. 10(A) is a graph schematically showing a variation in the current flowing in the stator windings W. FIGS. 10(B) to 10(E) show positional relationships between the rotor 30 and the stator 40. FIG. 10(B) shows a first positional relationship. FIG. 10(C) shows a second positional relationship. FIG. 10(D) shows a third positional relationship. FIG. 10(E) shows a fourth positional relationship.

The horizontal axis in FIGS. 10(B) to 10(E) represents the electrical angle. It should be noted that the horizontal axis shows a range of 180 to 360 degrees in electrical angle. The horizontal axis in FIGS. 10(B) to 10(E) also represents the phase of the current flowing in the stator windings W. The horizontal axis in FIGS. 10(B) to 10(E) also represents time in a state where the rotor 30 is rotated at a constant speed.

FIG. 10(A) also shows a forward end correspondence range L1 and a rearward end correspondence range L2 which serve as a standard of comparison of phases for detecting desynchronization.

When the control device CT performs the sinusoidal-wave driving of the stator windings W, currents Iv, Iu, and Iw as illustrated in FIG. 10(A) flow in the stator windings W (Wv, Wu, and Ww) of V-phase, U-phase, and W-phase, respectively. When a positive current flows in stator windings W, the teeth 43 having the stator windings W wound thereon serve as S poles. When a negative current flows in stator windings W, the teeth 43 serve as N pole.

Each of FIGS. 10(B) to 10(E) shows a V-phase stator winding Wv, a U-phase stator winding Wu, and an W-phase stator winding Ww that are arranged side by side.

FIG. 10(B) shows the positional relationship at a current phase Q31 of FIG. 10(A). FIG. 10(C) shows the positional relationship at a current phase Q32 of FIG. 10(A). FIG. 10(D) shows the positional relationship at a current phase Q33 of FIG. 10(A). FIG. 10(E) shows the positional relationship at a current phase Q34 of FIG. 10(A). FIGS. 10(B) to 10(E) show the positional relationships in a case where the rotor 30 follows a current variation in the stator windings W.

Referring to FIG. 10(B), at the phase Q31, the tooth 43 having the V-phase stator winding Wv wound thereon serves as N pole, and the tooth 43 having the W-phase stator winding Ww wound thereon serve as S pole. This causes a force in the forward rotation direction to act on the rotor 30.

Referring to FIG. 10(C), at the phase Q32, the tooth 43 having the U-phase stator winding Wu wound thereon serve as S pole instead of the tooth 43 having the W-phase stator winding Ww wound thereon. This further causes a force in the forward rotation direction to act on the rotor 30, as indicated by the arrow.

Referring to FIG. 10(D), at the phase Q32, the tooth 43 having the W-phase stator winding Ww wound thereon serve as N pole instead of the tooth 43 having the V-phase stator winding Wv wound thereon. This further causes a force in the forward rotation direction to act on the rotor 30.

In the middle of the rotor 30 rotating from the state of FIG. 10(C) into the state of FIG. 10(D), the rearward end 38b of the detection object part 38 is detected by the rotor position detection device 50. In other words, in a case of the rotor 30 following, the electrical signal flowing in the detection-purpose winding 51 varies in accordance with the rearward end 38b at a phase Qa which is before the phase Q33.

In this manner, the control device CT performs on/off-operation of the plurality of switching parts 611 to 616 at predefined timings based on the data stored in the on/off-operation storage unit 623 in the state where the crankshaft 15 is stopped. The control device CT thus supplies a current to the multi-phase stator windings W, to start forward rotation of the crankshaft 15. This enables forward rotation of the crankshaft 15 to be started even in a state where the electrical signal in the detection-purpose winding 51 does not vary, which typically is the state where the crankshaft 15 is stopped.

Here, the control device CT may use the initial operation unit 624 instead of referring to the data stored in the on/off-operation storage unit 623, to start rotation of the crankshaft 15. In this case, the control device CT performs on/off-operation of the plurality of switching parts 611 to 616 at predefined timings based on the electrical signal generated by the initial operation unit 624 in the state where the crankshaft 15 is stopped. The control device CT thus supplies a current to the multi-phase stator windings W, to start forward rotation of the crankshaft 15.

The initial operation unit 624 is, for example, a circuit that outputs a signal for performing on/off-operation of the switching parts 611 to 616 based on the electrical angle counter value.

In the ramp driving (S13) in the start control mode, the control device CT controls the current flowing in the stator windings W such that the cycle of variation in the current flowing in the multi-phase stator windings W, which in in the form of a sinusoidal wave, is shortened over time as the speed target value increases.

Since the control device CT drives the crankshaft 15 in forward rotation while shortening the cycle of variation in the current of the multi-phase stator windings W, the rotation speed of the crankshaft 15 can be gradually increased.

In the state where the crankshaft 15 and the rotor 30 are stopped, the electrical signal flowing in the detection-purpose winding 51 of the rotor position detection device 50 does not vary. That is, in the state where the crankshaft 15 and the rotor 30 are stopped, the rotor position detection device 50 outputs no signal.

As the plurality of detection object parts 38 are moved along with rotation of the crankshaft 15 and the rotor 30, the electrical signal flowing in the detection-purpose winding 51 of the rotor position detection device 50 varies.

The control device CT determines whether or not the rotation speed of the rotor 30 exceeds a detection-allowed speed that allows the rotor position detection device 50 to perform detection (S14). The detection-allowed speed is a lower limit of the speed that allows the rotor position detection device 50 to perform stable detection.

If the rotation speed of the rotor 30 does not exceed the detection-allowed speed (S14:No), the control device CT continues the ramp driving (S13).

If the rotation speed of the rotor 30 exceeds the detection-allowed speed (S14:Yes), the control device CT controls on/off-operation of the plurality of switching parts based on the electrical signal flowing in the detection-purpose winding 51 of the rotor position detection device 50. To be specific, in the start control mode, the control device CT detects desynchronization of the rotor 30 based on the electrical signal flowing in the detection-purpose winding 51 (S15 to S18). Upon detection of desynchronization, the control device CT redoes the control from the setting of the speed initial value as the speed target value (S12).

In steps S15 to S18 mentioned above, the control device CT detects desynchronization based on both a timing of a variation corresponding to the forward end 38a of the detection object part 38 and a timing of a variation corresponding to the rearward end 38b of the detection object part 38, among variations in the electrical signal flowing in the detection-purpose winding 51.

The control device CT compares both the timing of the variation corresponding to the forward end 38a of the detection object part 38 and the timing of the variation corresponding to the rearward end 38b of the detection object part 38 among variations in the electrical signal flowing in the detection-purpose winding 51, against a variation phase of the current flowing in the stator windings W. Based on this comparison, the control device CT detects occurrence of desynchronization of the rotor 30.

In more detail, the control device CT detects occurrence of desynchronization based on a result of comparison of the timing of the variation corresponding to the forward end 38a of the detection object part 38 among variations in the electrical signal against the forward end correspondence range L1 which corresponds to the forward end 38a in a variation phase of the sinusoidal current flowing in the stator windings W. Moreover, the control device CT detects occurrence of desynchronization of the rotor 30 based on a result of comparison of the timing of the variation corresponding to the rearward end 38b of the detection object part 38 among variations in the electrical signal against the rearward end correspondence range L2 which corresponds to the rearward end 38b in a variation phase of the sinusoidal current flowing in the stator windings W. The rearward end correspondence range L2 is a range different from the forward end correspondence range L1.

In detecting occurrence of desynchronization, the control device CT determines whether or not the forward end 38a of the detection object part 38 is detected (S15). In detail, the control device CT determines whether or not a variation corresponding to the forward end 38a of the detection object part 38 is occurring in the electrical signal flowing in the detection-purpose winding 51. In more detail, the control device CT determines whether or not the output signal (D2 in FIG. 6) of the both edge detection unit 66 (see FIG. 5) has a rising edge.

If the forward end 38a is not detected (S15:No), the control device CT determines whether or not the rearward end 38b of the detection object part 38 is detected (S17). If neither the forward end 38a nor the rearward end 38b is detected (S17:No), the control device CT repeats the ramp driving (S13), detection of the forward end 38a, and detection of the rearward end 38b. That is, the control device CT continues the ramp driving (S13).

If, in step S15, the forward end 38a is detected (S15:Yes), the control device CT compares a timing of a variation corresponding to the forward end 38a against a variation phase of the current flowing in the stator windings W. In detail, the control device CT compares a timing of a variation corresponding to the forward end 38a against the forward end correspondence range L1 (FIG. 10(A)) which corresponds to the forward end in the variation phase of the current flowing in the stator windings W (S16). More specifically, the control device CT determines whether or not a timing of a variation corresponding to the forward end 38a is within the forward end correspondence range L1.

In step S16, the control device CT obtains the electrical angle value at the timing of the variation corresponding to the forward end 38a. The electrical angle value thus obtained indicates a timing of a variation corresponding to the forward end 38a in the variation phase of the current flowing in the stator windings W.

The control device CT determines whether or not the electrical angle value indicating the timing corresponding to the forward end 38a is within the forward end correspondence range L1.

The forward end correspondence range L1 is a range allowable as a timing corresponding to the forward end 38a when desynchronization of the rotor 30 is not occurring. The forward end correspondence range L1 is expressed in the form of the electrical angle. The forward end correspondence range L1 is determined in accordance with the position of the rotor position detection device 50 and the position of the detection object part 38. The width of the forward end correspondence range L1 is set in accordance with the sensitivity level of detection of desynchronization. The forward end correspondence range L1 is, for example, a range from 0 to 180 degrees.

The control device CT determines whether or not the electrical angle value indicating the timing corresponding to the forward end 38a is within the forward end correspondence range L1. This is how the control device CT determines whether or not rotation of the rotor 30 follows the current in the stator windings W. In other words, the control device CT determines whether or not the forward end 38a is detected at a timing of the phase of the current flowing in the stator windings W obtained in a case of the rotor 30 following.

If, as a result of comparison made in step S16, the electrical angle value indicating the timing of the variation corresponding to the forward end 38a is not within the forward end correspondence range, the control device CT determines that desynchronization occurs (S16:No).

Upon detection of occurrence of desynchronization, the control device CT controls the plurality of switching parts such that a variation in the current flowing in the stator windings is re-started from a predefined initial cycle. To be specific, the control device CT sets the speed initial value as the speed target value (S12), and then performs the ramp driving control (S13). Consequently, a variation in the current flowing in the stator windings changes from a cycle corresponding to the speed initial value. That is, rotation of the rotor 30 is redone. Upon occurrence of desynchronization, rotation of the rotor 30 is redone, so that rotation of the rotor 30 follows the variation in the current to the stator windings W.

If, in step S17, the rearward end 38b is detected (S17:Yes), the control device CT compares a timing of a variation corresponding to the rearward end 38b against the rearward end correspondence range L2 (FIG. 10(A)) which corresponds to the rearward end in the variation phase of the current flowing in the stator windings W (S18). More specifically, the control device CT determines whether or not a timing of a variation corresponding to the rearward end 38b is within the rearward end correspondence range L2.

In step S18, the control device CT obtains the electrical angle value at the timing of the variation corresponding to the rearward end 38b. The electrical angle value thus obtained indicates a timing of a variation corresponding to the rearward end 38b in the variation phase of the current flowing in the stator windings W. The control device CT determines whether or not the obtained electrical angle value, which means the electrical angle value indicating the timing of the variation corresponding to the rearward end 38b, is within the rearward end correspondence range L2.

The rearward end correspondence range L2 is a range allowable as a timing corresponding to the rearward end 38b when desynchronization of the rotor 30 is not occurring. The rearward end correspondence range L2 is a range different from the forward end correspondence range L1. The rearward end correspondence range L2 is expressed in the form of the electrical angle. The rearward end correspondence range L2 as well as the forward end correspondence range L1 is set in accordance with the position of the rotor position detection device 50 and the sensitivity level of detection of desynchronization, etc. It may be acceptable that the rearward end correspondence range L2 and the forward end correspondence range L1 partially overlap. The rearward end correspondence range is, for example, a range from 180 to 360 degrees.

The control device CT determines whether or not the electrical angle value indicating the timing corresponding to the rearward end 38b is within the rearward end correspondence range L2. This is how the control device CT determines whether or not rotation of the rotor 30 follows the current in the stator windings W. In other words, the control device CT determines whether or not the rearward end 38b is detected at a timing of the phase of the current flowing in the stator windings W obtained in a case of the rotor 30 following.

In this embodiment, as shown in FIG. 6, among variations in the electrical signal flowing in the detection-purpose winding 51, a variation corresponding to the forward end 38a and a variation corresponding to the rearward end 38b are clearly distinguished from each other. The control device CT detects occurrence of desynchronization in the forward end correspondence range L1 and the rearward end correspondence range L2 which are different from each other.

If, as a result of comparison made in step S18, the electrical angle value indicating the timing of the variation corresponding to the rearward end 38b is not within the rearward end correspondence range, the control device CT determines that desynchronization occurs (S18:No).

Upon detection of occurrence of desynchronization, the control device CT controls the plurality of switching parts such that a variation in the current flowing in the stator windings is re-started from a predefined initial cycle. This control is the same as the control performed upon determination that desynchronization occurs in step S16 mentioned above.

Upon occurrence of desynchronization, rotation of the rotor 30 is redone, so that rotation of the rotor 30 follows the variation in the current to the stator windings W.

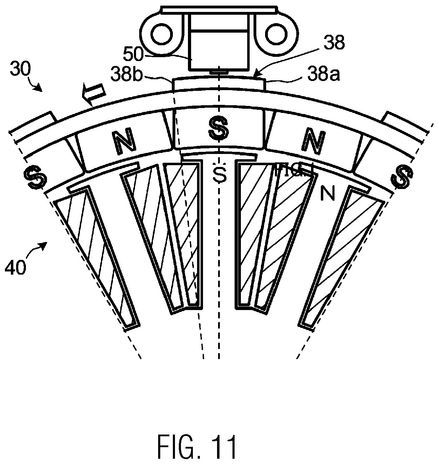

FIG. 11 shows the positional relationship between the rotor 30 and the stator 40 when desynchronization is occurring.

The positional relationship shown in FIG. 11 shows a state where the rotor 30 makes reverse rotation from the position shown in FIG. 10(C), instead of rotating to the position shown in FIG. 10(D).

When, for example, the rotor 30 makes normal rotation from the state shown in FIG. 10(C) to the state shown in FIG. 10(D), the rearward end 38b of the detection object part 38 is detected by the rotor position detection device 50.

When, on the other hand, the rotor 30 makes reverse rotation halfway and returns to the position shown in FIG. 11, the rearward end 38b of the detection object part 38 is not detected by the rotor position detection device 50 at a phase (the phase Qa in FIG. 10(A)) in the originally assumed current phase. The rearward end 38b of the detection object part 38 is then detected at a timing different from the originally assumed timing. If the rotor 30 continues the reverse rotation, the forward end 38a is detected. In this case, the forward end 38a is detected as a "rearward end" of the detection object part 38 in the reverse rotation direction.

As a result, the electrical angle at a time when the rearward end 38b of the detection object part 38 is detected is not included in the rearward end correspondence range (L2 in FIG. 10(A)). In step S18 of FIG. 7, therefore, it is determined that the timing of the variation corresponding to the rearward end 38b is not within the rearward end correspondence range (S18:No). That is, it is determined that desynchronization occurs.

The control device CT is able to detect desynchronization at an early stage by comparing electrical signal variations corresponding to both the forward end 38a and the rearward end 38b of the detection object part 38 against the variation phase of the current flowing in the stator windings W. The control device CT, therefore, redoes rotation of the rotor 30 at an early stage.

In the manner described above, followability of rotation of the rotor 30 to a variation in the current flowing in the stator winding W is improved in the start control.

If the timing of the electrical signal variation corresponding to the forward end 38a is within the forward end correspondence range (S16:Yes) or if the timing of the electrical signal variation corresponding to the rearward end 38b is within the rearward end correspondence range (S18:Yes), the control device CT counts the number of times the determination is made that the timing is within each correspondence range (L1, L2). If the counted number of times is greater than a predefined threshold value, the control device CT shifts to the acceleration control (see FIG. 8).

That is, if the number of times the forward end 38a and the rearward end 38b are detected is greater than the predefined threshold value in a situation where no desynchronization occurs, the control device CT shifts to the acceleration control. The threshold is, for example, a value equal to or greater than one. In this case, at least when desynchronization does not occur with respect to either the forward end 38a nor the rearward end 38b, the control device CT shifts to the acceleration control (S35 in FIG. 8).

In the acceleration control shown in FIG. 8, the control device CT performs synchronization driving (S31). To be exact, the start control unit 621 of the starter control unit 62 performs the synchronization driving. The control device CT makes a control for performing on/off-operation of the switching parts 611 to 616. The control device CT performs a feedback control based on the rotation speed of the rotor 30, to sequentially render the multi-phase stator windings W rendering at timings based on the rotation speed of the rotor 30.

In the synchronization driving (S31), like in the ramp driving (S13 of FIG. 7) in the start control mode, the control device CT performs sinusoidal-wave driving of the stator windings W. The control device CT increases the electrical angle counter value. In the synchronization driving (S31), however, the control device CT increases the electrical angle counter value into a value corresponding to the actual rotation speed of the rotor 30.

The control device CT performs detection of desynchronization which is the same as the detection of desynchronization in the start control shown in FIG. 7. In each of steps S35 to S38 in FIG. 8, the control device CT performs the same processing as in steps S15 to S18 of FIG. 7. In the acceleration control, the control device CT compares both the timing of the variation corresponding to the forward end 38a of the detection object part 38 and the timing of the variation corresponding to the rearward end 38b of the detection object part 38 among variations in the electrical signal flowing in the detection-purpose winding 51 against the variation phase of the current flowing in the stator windings W. The control device CT thus detects occurrence of desynchronization of the rotor 30 at an early stage.

Since processing in respective steps S35 to S38 is the same as that of steps S15 to S18 in the start control, descriptions thereof are omitted. Depending on the sensitivity level of detection, the forward end correspondence range in the acceleration control may be a range different from the forward end correspondence range in the start control. The same applies to the rearward end correspondence range.

In the acceleration control shown in FIG. 8, upon detection of occurrence of desynchronization (S36:No or S38:No), the control device CT controls the plurality of switching parts such that a variation in the current flowing in the stator windings is re-started from a predefined initial cycle ("A" in FIG. 8 and FIG. 7). To be specific, the control device CT sets the speed initial value as the speed target value (S12 of FIG. 7). Then, the control device CT performs the ramp driving control (S13 of FIG. 7). Consequently, a variation in the current flowing in the stator windings changes from a cycle corresponding to the speed initial value. That is, rotation of the rotor 30 is redone. Upon occurrence of desynchronization, rotation of the rotor 30 is redone at an early stage, so that rotation of the rotor 30 follows the variation in the current to the stator windings W at an early stage. This increases the followability of rotation of the rotor.

In a case where desynchronization is detected in the acceleration control which is subsequent to the start control, it is highly likely that the rotor 30 is rotating so as to follow a variation in the current flowing in the stator windings. In the acceleration control, therefore, it may be possible that rotation is not redone immediately after desynchronization is detected, but rotation is redone if the number of times desynchronization is detected exceeds a predefined value.

In the acceleration control shown in FIG. 8, if occurrence of desynchronization is not detected (S36:Yes or S38:Yes), the control device CT performs phase correction (S41).

The control device CT performs the phase correction in accordance with both the detection of the forward end 38a of the detection object part 38 (S35:Yes) and the detection of the rearward end 38b of the detection object part 38 (S37:Yes).

Upon detection of the forward end 38a of the detection object part 38, the control device CT performs the phase correction (S41) so as to correct the electrical angle counter value into a value corresponding to the forward end 38a (S41). Upon detection of the rearward end 38b of the detection object part 38, the control device CT performs the phase correction so as to correct the electrical angle counter value into a value corresponding to the rearward end 38b (S41).

The electrical angle counter value indicates the variation phase of the current flowing in the stator winding W. As a result of the phase correction, the electrical angle counter value is corrected in accordance with the position of the rotor 30.

The control device CT performs a feedback control based on the position of the rotor 30, to bring the phase of the current flowing in the stator windings W into conformity with the position of the rotor 30. This brings rotation of the rotor 30 into synchronization with a variation in the current flowing in the stator winding W.

Precisely controlling the current flowing in the stator windings W approximates the waveform of the current flowing in the stator winding W to an ideal sinusoidal waveform.

In the acceleration control, the control device CT starts the combustion operation of the engine body 10 (S17). To be exact, the combustion control unit 63 starts the combustion operation of the engine body 10. In the combustion operation, if the crankshaft 15 is in a predefined injection position, the control device CT directs the fuel injector device 18 to inject the fuel. If the crankshaft 15 is in a predefined ignition position, the control device CT directs the spark plug 19 to perform the ignition operation. In this manner, the control device CT controls the combustion operation of the engine body 10.

In the acceleration control, the control device CT determines whether or not the rotation speed of the rotor 30 is higher than a predefined start completion speed (S43). The start completion speed is a speed higher than a rotation speed that enables the engine body 10 to operate without the crankshaft 15 being rotated by the starter motor 20. The start completion speed is, for example, a speed higher than the idling rotation speed of the engine body 10.

If the rotation speed of the rotor 30 is equal to or less than the predefined start completion speed (S43:No), the control device CT continues the synchronization driving.

If the rotation speed of the rotor 30 is higher than the predefined start completion speed, the control device CT terminates the acceleration control (S44).

The control device CT of this embodiment controls on/off-operation of the switching parts 611 to 616 based on both the timing of the variation corresponding to the forward end 38a of the detection object part 38 and the timing of the variation corresponding to the rearward end 38b of the detection object part 38 among variations in the electrical signal flowing in the detection-purpose winding 51. Among variations in the electrical signal, the variation corresponding to the forward end 38a and the variation corresponding to the rearward end 38b can be detected as different types of variations. Accordingly, on/off-operation of the switching parts 611 to 616 can be controlled at the position of the rotor 30 corresponding to the forward end 38a of the detection object part 38 and the position of the rotor 30 corresponding to the rearward end 38b of the detection object part 38. A current to be supplied to the stator windings W is controlled more precisely.

The highly accurate control improves the followability of rotation of the rotor 30 to a variation in the current supplied to the stator windings W. The rotor 30, therefore, is capable of easy following, even when a current to be supplied to the stator winding W is controlled such that the rotation speed of the starter motor 20 increases at an early stage. As a result, rotation of the crankshaft 15 can be accelerated in a shorter time.

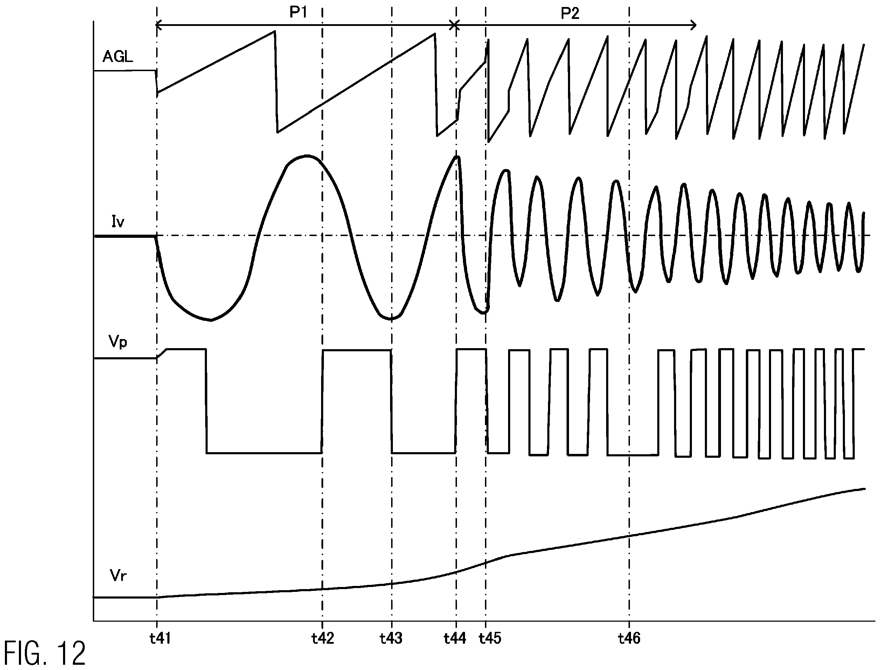

FIG. 12 is a timing chart showing exemplary current and voltage at a time of starting the engine body 10.

FIG. 12 illustrates a current Iv that flows in the V-phase stator windings W. In FIG. 12, moreover, an electrical signal Vp indicating detection of the detection object part 38 of the rotor 30 detected by the rotor position detection device 50, an electrical angle counter value AGL of the control device CT, and the rotation speed of the rotor 30 are shown in the form of a voltage level. These waveforms are shown on the same time axis (horizontal axis). In FIG.12, P1 represents a period of the rotation start control mode, and P2 represents a period of the acceleration control mode. The electrical angle counter value AGL represents the phase of a current flowing in the stator windings W. The electrical angle counter value AGL is internal data counted by the control device CT.

At time t41, the control device CT starts rotation of the crankshaft 15. In the ramp driving in the rotation start control mode (S13 of FIG. 7), the control device CT counts the electrical angle counter value AGL as time elapses. The electrical angle counter value AGL increases over time by a predefined increment, irrespective of the position of the rotor 30.

The control device CT performs on/off-operation of the switching parts 611 to 616 at predefined timings. The control device CT performs on/off-operation of the switching parts 611 to 616 with a duty cycle corresponding to the electrical angle counter value AGL. The electrical angle counter value AGL increases over time by a predefined increment, irrespective of the position of the rotor 30. Accordingly, on/off-operation of the switching parts 611 to 616 is also performed at predefined timings. In more detail, the control device CT performs on/off-operation of the switching parts 611 to 616 in a preset duty cycle pattern.

As a consequence, the sinusoidal current Iv as illustrated in FIG. 12 flows in the V-phase stator windings W.

It should be noted that a current also flows in each of U-phase and W-phase stator windings W in accordance with the electrical angle counter value AGL, the current being offset from the current flowing in the V-phase stator windings W.

As indicated by the cycle of the current Iv in FIG. 12, a period in which the starter control unit 62 sequentially renders the stator windings W conducting in the start control (P1) is longer than a period in which the starter control unit 62 sequentially renders them conducting in the acceleration control (P2). This makes it easy that the rotor 30 starts rotation following the sequential conduction. The starter control unit 62 performs such a control that, in the start control (P1), the multi-phase stator windings W are sequentially rendered conducting at timings whose interval is gradually shortened.

After the rotor 30 starts rotation, the detection-purpose winding 51 of the rotor position detection device 50 detects the detection object part 38. FIG. 12 illustrates an output signal Vp of the both edge detection unit 66. The output signal Vp of the both edge detection unit 66 represents a variation in the electrical signal in the detection-purpose winding 51, as has been described above with reference to FIG. 6. The output signal Vp of the both edge detection unit 66 is described as the electrical signal Vp of the detection-purpose winding 51.

The control device CT shifts from the control mode for starting rotation of the crankshaft 15 to the control mode for accelerating the rotation of the crankshaft 15, based on the electrical signal in the detection-purpose winding 51 of the rotor position detection device 50, the electrical signal varying depending on a magnetic state change caused by movement of the plurality of detection object parts 38.

At times t42, t43 in the start control (P1), the electrical signal Vp in the detection-purpose winding 51 varies. At times t42, t43, the control device CT performs detection of desynchronization of the rotor 30. Since desynchronization of the rotor 30 is not detected, the control device CT shifts from the start control (P1) to the acceleration control (P2). The control device CT performs on/off-operation of the plurality of switching parts 611 to 616 at timings that are based on an electrical signal flowing in the detection-purpose winding 51 of the rotor position detection device 50, the electrical signal varying depending on a magnetic state change caused when the plurality of detection object parts 38 move along with forward rotation of the crankshaft 15.

At time t44 in the acceleration control (P2), the electrical signal Vp in the detection-purpose winding 51 varies in accordance with the forward end 38a of the detection object part 38. The electrical signal Vp includes a rising edge at time t44. The control device CT performs detection of desynchronization by comparing the timing of the variation in the electrical signal Vp with a phase range of the current Iv corresponding to the forward end 38a. In addition, the control device CT corrects the electrical angle counter value AGL at time t44 in the acceleration control (P2). Thus, the control device CT performs on/off-operation of the plurality of switching parts 611 to 616 at a timing when the electrical signal Vp in the detection-purpose winding 51 varies in accordance with the forward end 38a of the detection object part 38.

At time t45 in the acceleration control (P2), the electrical signal Vp in the detection-purpose winding 51 varies in accordance with the rearward end 38b of the detection object part 38. The electrical signal Vp includes a falling edge at time t45. The control device CT performs detection of desynchronization by comparing the timing of the variation in the electrical signal Vp with a phase range of the current Iv corresponding to the rearward end 38b.

In addition, the control device CT corrects the electrical angle counter value AGL at time t45 in the acceleration control (P2). Thus, the control device CT performs on/off-operation of the plurality of switching parts 611 to 616 at a timing when the electrical signal Vp in the detection-purpose winding 51 varies in accordance with the rearward end 38b of the detection object part 38.

Even after time t45 in the acceleration control (P2), the control device CT corrects the electrical angle counter value AGL at both of timings when the electrical signal Vp in the detection-purpose winding 51 varies in accordance with the forward end 38a and the rearward end 38b of the detection object part 38, respectively.

The control device CT performs detection of desynchronization and correction of the electrical angle counter value AGL in the acceleration control (P2), until the rotation speed exceeds the start completion speed. At positions corresponding to the forward end 38a and the rearward end 38b, respectively, the control device corrects the electrical angle counter value AGL based on timings of variations in the electrical signal Vp corresponding to the forward end and the rearward end, respectively. The electrical angle counter value AGL is controlled with a high accuracy.

Particularly when the rotation speed of the rotor is low at a time of engine start, the control is performed at a timing corresponding to each of the forward end 38a and the rearward end 38b. Since the control is performed with a high accuracy, the followability of rotation of the rotor 30 is improved. Accordingly, a drive torque of the starter motor 20 increases. This enables the rotor 30 to follow even though a current to be supplied to the stator windings varies quickly. Rotation of the crankshaft is accelerated at an early stage.

In the engine body 10 having a high-load region and a low-load region, a torque required at a time of engine start largely varies. At a time of engine start of the engine body 10 having a high-load region and a low-load region, the control with a high accuracy is performed using each of the forward end 38a and the rearward end 38b, so that rotation of the crankshaft is accelerated at an early stage.

It may be possible that the control device CT accelerates forward rotation of the crankshaft 15 in a predefined time period after completion of start of the engine body 10. In this case, forward rotation of the crankshaft 15 caused by the combustion operation of the engine body 10 can be more stabilized. In addition, forward rotation of the crankshaft 15 can be accelerated more promptly.

FIG. 13 shows an external appearance of the straddled vehicle 1 equipped with the engine unit EU.

The straddled vehicle 1 shown in FIG. 13 includes the above-described engine unit EU, a vehicle body 2, wheels 3a, 3b, and the battery 4. The engine unit EU mounted to the straddled vehicle 1 drives the wheel 3b which is a drive wheel, to rotate the wheel 3b so that the straddled vehicle 1 travels.

The straddled vehicle 1 shown in FIG. 13 is equipped with the engine unit EU having an improved early-start ability of the engine. The straddled vehicle 1, therefore, is able to start running at an early stage.

Less power is required for rotating the crankshaft 15 in order to start the engine body 10 of the engine unit EU. Moreover, it is less likely that, after the crankshaft 15 is stopped, the crankshaft needs to make reverse rotation to a position where the rotational load is low.

[DESCRIPTION OF THE REFERENCE SIGNS]

| | |
|---|---|
| 1 | straddled vehicle |
| 4 | battery |
| 10 | four-stroke engine body |
| 15 | crankshaft |
| 20 | starter motor |
| 30 | rotor |
| 34 | back yoke portion |
| 38 | detection object part |
| 38a | forward end |
| 38b | rearward end |
| 40 | stator |
| 50 | rotor position detection device |
| 51 | detection-purpose winding |
| 53 | core |
| 60 | control unit |
| 61 | inverter |
| 611 to 616 | switching part |
| EU | engine unit |
| CT | control device |
| W | stator winding |

**Claims**

1.  An engine unit (EU) mountable to a straddled vehicle (1), the engine unit (EU) comprising:

    a four-stroke engine body (10) configured such that, during four strokes in a state where combustion is stopped, a high-load region (TH) and a low-load region (TL) occur, the high-load region (TH) having a high load on rotation of the crankshaft (15), the low-load region (TL) having a lower load on rotation of the crankshaft (15) than that of the high-load region (TH);
    a starter motor (20) including a stator (40), a rotor (30), and a plurality of detection object parts (38), the stator (40) having a stator core (ST) that is provided with a plurality of teeth (43) arranged at intervals with respect to a circumferential direction and multi-phase stator windings (W) that are wound on the plurality of teeth (43), the rotor (30) having a permanent magnet part (37) provided outside the stator (40) with respect to a radial direction and a back yoke portion (34) provided outside the permanent magnet part (37) with respect to the radial direction, the permanent magnet part (37) having a plurality of magnetic pole faces (37a) arranged in the circumferential direction on a surface of the permanent magnet part (37) opposed to the stator (40), the rotor (30) configured to be rotated along with rotation of the crankshaft (15), the plurality of detection object parts (38) provided on an outer surface of the rotor (30) and arranged at intervals with respect to the circumferential direction, each of the plurality of detection object parts (38) extending from its forward end (38a) to its rearward end (38b) with respect to a direction of its movement along with rotation of the rotor (30);
    a rotor position detection device (50) arranged at a position allowed to be opposed to each of the plurality of detection object parts (38) with an air gap therebetween during rotation of the rotor (30), the rotor position detection device (50) including a detection-purpose winding (51) provided separately from the multi-phase stator windings (W), the detection-purpose winding (51) configured such that an electrical signal (D1) flows therethrough, the electrical signal (D1) exhibiting different waveforms between when corresponding to the forward end (38a) and when corresponding to the rearward end (38b), the difference caused due to a magnetic state change caused by movement of the plurality of detection object parts (38);

an inverter (61) connected to the multi-phase stator windings (W) and including a plurality of switching parts (611-616) that control, by on/off-operation thereof, a current flowing between the multi-phase stator windings (W) and a battery; and

a control device (CT) that controls an operation of the starter motor (20) by controlling the plurality of switching parts (611-616),

the control device (CT) configured to shift from a start control mode to an acceleration control mode, the start control mode being a mode for performing on/off-operation of the plurality of switching parts (611-616) at predefined timings in a state where the crankshaft (15) is stopped such that a current is supplied to the multi-phase stator windings (W) to start forward rotation of the crankshaft (15), the acceleration control mode being a mode for performing on/off-operation of the plurality of switching parts (611-616) at timings based on an electrical signal (D1) flowing in the detection-purpose winding (51) of the rotor position detection device (50) such that a current is supplied to the multi-phase stator windings (W) to accelerate forward rotation of the crankshaft (15), the electrical signal (D1) varying due to a magnetic state change caused by movement of the plurality of detection object parts (38) along with forward rotation of the crankshaft (15),

**characterized in that**

the control device (CT) is configured to cause rotation of the rotor (30) to follow a variation in a current flowing in the multi-phase stator windings (W) by controlling on/off-operation of the plurality of switching parts (611-616) based on both a timing of a variation corresponding to the forward end (38a) of the detection object part (38) and a timing of a variation corresponding to the rearward end (38b) of the detection object part (38) among variations in the electrical signal (D1) flowing in the detection-purpose winding (51) in at least part of a time period during which at least one of the start control mode and the acceleration control mode is performed, and in at least part of a time period during which the acceleration control mode is performed, the control device (CT) performs on/off-operation of the plurality of switching parts (611-616) so as to control a current flowing in one of the multi-phase stator windings (W) such that a variation in the current is repeated, and performs on/off-operation of the plurality of switching parts (611-616) so as to correct a variation phase of the current at both a timing of a variation corresponding to the forward end (38a) of the detection object part (38) and a timing of a variation corresponding to the rearward end (38b) of the detection object part (38) among variations in the electrical signal (D1) flowing in the detection-purpose winding (51).

2. The engine unit (EU) according to claim 1, wherein
   in at least part of at least one of time periods during which the start control mode and the acceleration control mode are performed, the control device (CT) performs on/off-operation of the plurality of switching parts (611-616) so as to control a current flowing in the one of the multi-phase stator windings (W) such that a cycle of variation in the current changes over time, and detects occurrence of desynchronization of the rotor (30) by comparing, against a variation phase of the current flowing in the one of the multi-phase stator windings (W), both a timing of a variation corresponding to the forward end (38a) of the detection object part (38) and a timing of a variation corresponding to the rearward end (38b) of the detection object part (38) among variations in the electrical signal (D1) flowing in the detection-purpose winding (51).

3. The engine unit (EU) according to claim 2, wherein
   the control device (CT) detects occurrence of desynchronization of the rotor (30) based on both: a result of comparison between a timing of a variation corresponding to the forward end (38a) of the detection object part (38) among variations in the electrical signal (D1) and a forward end correspondence range which corresponds to the forward end in the variation phase of the current flowing in the one of the multi-phase stator windings (W); and a result of comparison between a timing of a variation corresponding to the rearward end (38b) of the detection object part (38) among variations in the electrical signal (D1) and a rearward end correspondence range which corresponds to the rearward end in the variation phase of the current flowing in the one of the multi-phase stator windings (W), the rearward end correspondence range being different from the forward end correspondence range.

4. The engine unit (EU) according to claim 2 or 3, wherein
   in a time period during which the start control mode is performed, the control device (CT) controls on/off-operation of the plurality of switching parts (611-616) such that a cycle of variation in the current flowing in the one of the multi-phase stator windings (W) is gradually shortened over time from a predefined initial cycle, and upon detection of occurrence of desynchronization of the rotor (30), controls the plurality of switching parts (611-616) such that a variation in the current flowing in the one of the multi-phase stator windings (W) is re-started from the initial cycle.

5.  The engine unit (EU) according to any one of claims 1 to 4, wherein
    the rotor position detection device (50) includes a core (53) made of a magnetic material and having the detection-purpose winding (51) wound thereon, the core (53) having a detection end face (53a) that is opposed to each of the plurality of detection object parts (38) with an air gap therebetween during rotation of the rotor (30), and
    the plurality of detection object parts (38) are formed such that the width (W2) of each of the detection object parts (38) and the interval between the respective detection object parts (38) with respect to the circumferential direction satisfy a relationship of (width (W2) of the detection object part (38)) < (width (W1) of the interval between the detection object parts (38)) < [(width (W2) of the detection object part (38)) + (width (W3) of the detection end face (53a))×2].

6.  The engine unit (EU) according to claim 5, wherein
    the plurality of detection object parts (38) are formed such that the width (W1) of each of the detection object parts (38) and the interval between the respective detection object parts (38) with respect to the circumferential direction substantially satisfy a relationship of (width (W1) of the interval between the detection object parts (38)) = (width (W2) of the detection object part (38)) + (width (W3) of the detection end face (53a)).

7.  The engine unit (EU) according to any one of claims 1 to 6, wherein
    in both the start control mode and the acceleration control mode, the control device (CT) causes a sinusoidal current to flow in the one of the multi-phase stator windings (W) by performing on/off-operation of the plurality of switching parts (611-616) with a cycle shorter than a cycle of variation in the current flowing in the one of the multi-phase stator windings (W).

8.  A straddled vehicle (1) comprising the engine unit (EU) according to any one of claims 1 to 7.

**Patentansprüche**

1.  An einem Aufsitzfahrzeug (1) montierbare Motoreinheit (EU), wobei die Motoreinheit (EU) umfasst:

    einen so ausgebildeten Viertakt-Motorblock (10), dass während vier Takte in einem Zustand, in dem die Verbrennung gestoppt ist, ein Hochlastbereich (TH) und ein Niedriglastbereich (TL) auftreten, wobei der Hochlastbereich (TH) eine hohe Last bei Drehung der Kurbelwelle (15) aufweist und der Niedriglastbereich (TL) eine niedrigere Last bei Drehung der Kurbelwelle (15) als die des Hochlastbereichs (TH) aufweist;
    einen Startermotor (20) umfassend einen Stator (40), einen Rotor (30) und eine Vielzahl von Erfassungsobjektteilen (38), wobei der Stator (40) einen Statorkern (ST) aufweist, der mit einer Vielzahl von in Intervallen in Bezug auf eine Umfangsrichtung angeordneten Zähnen (43) und Mehrphasen-Statorwicklungen (W), die auf die Vielzahl von Zähnen (43) gewickelt sind, ausgestattet ist, der Rotor (30) einen außerhalb des Stators (40) in Bezug auf eine radiale Richtung angeordneten Dauermagnetteil (37) und einen außerhalb des Dauermagnetteils (37) in Bezug auf die radiale Richtung angeordneten hinteren Jochabschnitt (34) aufweist, der Dauermagnetteil (37) eine Vielzahl von in der Umfangsrichtung auf einer Oberfläche des Dauermagnetteils (37) gegenüber dem Stator (40) angeordneten Magnetpolflächen (37a) aufweist, der Rotor (30) ausgebildet ist, längs mit der Drehung der Kurbelwelle (15) gedreht zu werden, die Vielzahl von Erfassungsobjektteilen (38) auf einer Außenfläche des Rotors (30) und in Intervallen in Bezug auf die Umfangsrichtung angeordnet sind und sich jeder der Vielzahl von Erfassungsobjektteilen (38) von seinem vorderen Ende (38a) zu seinem hinteren Ende (38b) in Bezug auf eine Richtung seiner Bewegung längs mit der Drehung des Rotors (30) erstreckt;
    eine an einer Position, bei der zugelassen wird, dass sie sich gegenüber von jedem der Vielzahl von Erfassungsobjektteilen (38) mit einem Luftspalt dazwischen während der Drehung des Rotors (30) befindet, angeordnete Rotorposition-Erfassungsvorrichtung (50), wobei die Rotorposition-Erfassungsvorrichtung (50) eine getrennt von den Mehrphasen-Statorwicklungen (W) angeordnete Erfassungszweckwicklung (51) umfasst, die Erfassungszweckwicklung (51) so ausgebildet ist, dass ein elektrisches Signal (D1) durch diese fließt, das elektrische Signal (D1) verschiedene Wellenform dazwischen wenn dem vorderen Ende (38a) und wenn dem hinteren Ende (38b) entsprechend aufweist und der Unterschied durch eine magnetische Zustandsänderung, bewirkt durch die Bewegung der Vielzahl von Erfassungsobjektteilen (38), verursacht wird;
    einen mit den Mehrphasen-Statorwicklungen (W) verbundenen und eine Vielzahl von Schaltteilen (611-616), die durch Ein/Aus-Betätigung von diesen einen zwischen den Mehrphasen-Statorwicklungen (W) und einer Batterie fließenden Strom steuern, umfassenden Wechselrichter (61); und
eine Steuervorrichtung (CT), die eine Betätigung des Startermotors (20) durch Steuern der Vielzahl von Schaltteilen (611-616) steuert,
wobei die Steuervorrichtung (CT) zum Wechseln von einem Startsteuermodus zu einem Beschleunigungssteuermodus ausgebildet ist, der Startsteuermodus ein Modus zum Durchführen der Ein/Aus-Betätigung der Vielzahl von Schaltteilen (611-616)zu vordefinierten Zeitpunkten in einem Zustand, in dem die Kurbelwelle (15) gestoppt ist, ist, so dass ein Strom zu den Mehrphasen-Statorwicklungen (W) geliefert wird, um die Vorwärtsdrehung der Kurbelwelle (15) zu starten, der Beschleunigungssteuermodus ein Modus zum Durchführen der Ein/Aus-Betätigung der Vielzahl von Schaltteilen (611-616) zu Zeitpunkten auf der Basis eines in der Erfassungszweckwicklung (51) der Rotorposition-Erfassungsvorrichtung (50) übertragenen elektrischen Signals (D1) ist, so dass ein Strom zu den Mehrphasen-Statorwicklungen (W) geliefert wird, um die Vorwärtsdrehung der Kurbelwelle (15) zu beschleunigen und das elektrische Signal (D1) aufgrund einer magnetischen Zustandsänderung, bewirkt durch die Bewegung der Vielzahl von Erfassungsobjektteilen (38) längs mit der Vorwärtsdrehung der Kurbelwelle (15), variiert,

**dadurch gekennzeichnet, dass**

die Steuervorrichtung (CT) zum Bewirken der Drehung des Rotors (30), so dass diese einer Variation in einem in den Mehrphasen-Statorwicklungen (W) fließenden Strom folgt, durch Steuern der Ein/Aus-Betätigung der Vielzahl von Schaltteilen (611-616) auf der Basis sowohl eines Zeitpunkts einer Variation entsprechend dem vorderen Ende (38a) des Erfassungsobjektteils (38) als auch eines Zeitpunkts einer Variation entsprechend dem hinteren Ende (38b) des Erfassungsobjektteils (38) aus Variationen im in der Erfassungszweckwicklung (51) in wenigstens einem Teil eines Zeitraums, während dem der Startsteuermodus oder/und der Beschleunigungssteuermodus durchgeführt wird, übertragenen elektrischen Signal (D1) ausgebildet ist, und
in wenigstens einem Teil eines Zeitraums, während dem der Beschleunigungssteuermodus durchgeführt wird, die Steuervorrichtung (CT) eine Ein/Aus-Betätigung der Vielzahl von Schaltteilen (611-616) durchführt, um einen in einer der Mehrphasen-Statorwicklungen (W) fließenden Strom zu steuern, so dass eine Variation im Strom wiederholt wird, und eine Ein/Aus-Betätigung der Vielzahl von Schaltteilen (611-616) durchführt, um eine Variationsphase des Stroms zu einem Zeitpunkt einer Variation entsprechend dem vorderen Ende (38a) des Erfassungsobjektteils (38) und einem Zeitpunkt einer Variation entsprechend dem hinteren Ende (38b) des Erfassungsobjektteils (38) aus Variationen im in der Erfassungszweckwicklung (51) übertragenen elektrischen Signal (D1) zu korrigieren.

2. Motoreinheit (EU) nach Anspruch 1, wobei
in wenigstens einem Teil von wenigstens einem von Zeiträumen, während dem der Startsteuermodus und der Beschleunigungsstartmodus durchgeführt werden, die Steuervorrichtung (CT) eine Ein/Aus-Betätigung der Vielzahl von Schaltteilen (611-616) durchführt, um einen in der einen der Mehrphasen-Statorwicklungen (W) fließenden Strom zu steuern, so dass sich ein Zyklus der Variation im Strom im Laufe der Zeit ändert, und das Auftreten einer Entsynchronisierung des Rotors (30) durch Vergleichen eines Zeitpunkts einer Variation entsprechend dem vorderen Ende (38a) des Erfassungsobjektteils (38) und eines Zeitpunkts einer Variation entsprechend dem hinteren Ende (38b) des Erfassungsobjektteils (38) aus Variationen im in der Erfassungszweckwicklung (51) übertragenen elektrischen Signal (d1) mit einer Variationsphase des in der einen der Mehrphasen-Statorwicklungen (W) fließenden Stroms erfasst.

3. Motoreinheit (EU) nach Anspruch 2, wobei
die Steuervorrichtung (CT) das Auftreten einer Entsynchronisierung des Rotors (30) erfasst auf der Basis von: einem Ergebnis des Vergleichs zwischen einem Zeitpunkt einer Variation entsprechend dem vorderen Ende (38a) des Erfassungsobjektteils (38) aus Variationen im elektrischen Signal (D1) und einem Vorderende-Entsprechungsbereich, der dem vorderen Ende in der Variationsphase des in der einen der Mehrphasen-Statorwicklungen (W) fließenden Stroms entspricht; und einem Ergebnis des Vergleichs zwischen einem Zeitpunkt einer Variation entsprechend dem hinteren Ende (38b) des Erfassungsobjektteils (38) aus Variationen im elektrischen Signal (D1) und einem Hinterende-Entsprechungsbereich, der dem hinteren Ende in der Variationsphase des in der einen der Mehrphasen-Statorwicklungen (W) fließenden Stroms entspricht, wobei sich der Hinterende-Entsprechungsbereich vom Vorderende-Entsprechungsbereich unterscheidet.

4. Motoreinheit (EU) nach Anspruch 2 oder 3, wobei
in einem Zeitraum, während dem der Startsteuermodus durchgeführt wird, die Steuervorrichtung (CT) die Ein/Aus-Betätigung der Vielzahl von Schaltteilen (611-616) durchführt, so dass ein Zyklus der Variation in dem in der einen der Mehrphasen-Statorwicklungen (W) fließenden Strom schrittweise im Laufe der Zeit von einem vordefinierten Ausgangszyklus verkürzt wird, und bei Erfassen des Auftretens einer Entsynchronisierung des Rotors (30) die Mehrzahl von Schaltteilen (611-616) so steuert, dass eine Variation im in der einen der Mehrphasen-Statorwicklungen (W) fließenden Strom vom Ausgangszyklus neugestartet wird.

**5.** Motoreinheit (EU) nach einem der Ansprüche 1 bis 4, wobei
die Rotorposition-Erfassungsvorrichtung (50) einen Kern (53) aus einem magnetischen Material umfasst, auf den die Erfassungszweckwicklung (51) gewickelt ist, wobei der Kern (53) eine Erfassungsendfläche (53a) aufweist, die gegenüber der Vielzahl von Erfassungsobjektteilen (38) mit einem Luftspalt dazwischen während der Drehung des Rotors (30) angeordnet ist, und
die Vielzahl von Erfassungsobjektteilen (38) so gebildet ist, dass die Breite (W2) von jedem der Erfassungsobjektteile (38) und der Intervall zwischen den jeweiligen Erfassungsobjektteilen (38) in Bezug auf die Umfangsrichtung einer Beziehung (Breite (W2) des Erfassungsobjektteils (38)) < (Breite (W1) des Intervalls zwischen den Erfassungsobjektteilen (38)) < [(Breite (W2) des Erfasungsobjektteils (38)) + (Breite (W3) der Erfassungsendfläche (53a))x2] entspricht.

**6.** Motoreinheit (EU) nach Anspruch 5, wobei
die Vielzahl von Erfassungsobjektteilen (38) so gebildet ist, dass die Breite (W1) von jedem der Erfassungsobjektteile (38) und der Intervall zwischen den jeweiligen Erfassungsobjektteilen (38) in Bezug auf die Umfangsrichtung im Wesentlichen einer Beziehung von (Breite (W1) des Intervalls zwischen den Erfassungsobjektteilen (38)) = (Breite (W2) des Erfassungsobjektteil (38)) + (Breite (W3) der Erfassungsendfläche (53a)) entspricht.

**7.** Motoreinheit (EU) nach einem der Ansprüche 1 bis 6, wobei
sowohl im Startsteuermodus als auch im Beschleunigungssteuermodus die Steuervorrichtung (CT) das Strömen eines sinusförmigen Stroms in der einen der Mehrphasen-Statorwicklungen (W) durch Durchführen einer Ein/Aus-Betätigung der Vielzahl von Schaltteilen (611-616) mit einem Zyklus kürzer als ein Zyklus der Variation im Fließen des Stroms in der einen der Mehrphasen-Statorwicklungen (W) bewirkt.

**8.** Aufsitzfahrzeug (1) umfassend die Motoreinheit (EU) nach einem der Ansprüche 1 bis 7.

## Revendications

**1.** Unité motrice (UE) pouvant être montée sur un véhicule de type à enfourcher (1), l'unité motrice (EU) comportant :

un corps de moteur à quatre temps (10) configuré de telle manière que, pendant les quatre temps, dans un état où la combustion est arrêtée, il se produit une région de charge élevée (TH) et une région de charge faible (TL), la région de charge élevée (TH) ayant une charge élevée lors de la rotation du vilebrequin (15), la région de charge faible (TL) ayant une charge plus faible lors de la rotation du vilebrequin (15) que la région de charge élevée (TH) ;
un démarreur (20) comprenant un stator (40), un rotor (30) et une pluralité de parties objets d'une détection (38), le stator (40) ayant un noyau de stator (ST) qui est pourvu d'une pluralité de dents (43) agencés à intervalles par rapport à une direction circonférentielle et des bobinages multi-phases (W) du stator qui sont enroulés autour de la pluralité de dents (43), le rotor (30) ayant une partie formant un aimant permanent (37) prévue à l'extérieur du stator (40) par rapport à une direction radiale et une partie formant une culasse arrière (34) prévue à l'extérieur de la partie formant un aimant permanent (37) par rapport à la direction radiale, la partie formant l'aiment permanent (37) ayant une pluralité de faces formant un pôle magnétique (37a) agencées dans la direction circonférentielle sur une surface de la partie formant l'aimant permanent (37) opposées au stator (40), le rotor (30) étant configuré pour tourner conjointement avec la rotation du vilebrequin (15), la pluralité de parties objets d'une détection (38) étant disposées sur une surface extérieure du rotor (30) et agencées à intervalles par rapport à la direction circonférentielle, chacune de la pluralité de parties objets d'une détection (38) s'étendant de son extrémité avant (38a) à son extrémité arrière (38b) par rapport à une direction de son mouvement accompagnant la rotation du rotor (30) ;
un dispositif de détection de position de rotor (50) agencé en une position pouvant être opposée à chacune des parties de la pluralité de parties objets d'une détection (38) de part et d'autre d'une lame d'air pendant la rotation du rotor (30), le dispositif de détection de position de rotor (50) comprenant un bobinage de détection (51) prévu séparément des bobinages multi-phases (W) du stator, le bobinage de détection (51) étant configuré de telle manière qu'un signal électrique (D1) le traverse, le signal électrique (D1) présentant différentes formes d'onde selon qu'il correspond à l'extrémité avant (38a) ou à l'extrémité arrière (38b), la différence étant due à une changement d'état magnétique provoqué par le mouvement de la pluralité de parties objets d'une détection (38) ;

un onduleur (61) connecté aux bobinages multi-phases (W) du stator et comprenant une pluralité de parties de commutation (611-616) qui commandent, par une opération de marche/arrêt, un courant circulant entre les bobinages multi-phases (W) du stator et une batterie ; et

un dispositif de commande (CT) qui commande un fonctionnement du démarreur (20) en commandant la pluralité de parties de commutation (611-616),

le dispositif de commande (CT) étant configuré pour passer d'un mode de commande de démarrage à un mode de commande d'accélération, le mode de commande de démarrage étant un mode dans lequel une opération de marche/arrêt de la pluralité de parties de commutation (611-616) est réalisée à des moments prédéfinis, dans un état où le vilebrequin (15) est à l'arrêt, de sorte qu'un courant est fourni aux bobinages multi-phases (W) du stator afin de démarrer une rotation vers l'avant du vilebrequin (15), le mode de commande d'accélération étant un mode dans lequel une opération de marche/arrêt de la pluralité de parties de commutation (611-616) est réalisée à des moments fondés sur un signal électrique (D1) circulant dans le bobinage de détection (51) du dispositif de détection de position de rotor (50), de sorte qu'un courant est fourni aux bobinages multi-phases (W) du stator pour accélérer la rotation vers l'avant du vilebrequin (15), le signal électrique (D1) variant en raison d'un changement d'état magnétique provoqué par le mouvement de la pluralité de parties objets d'une détection (38) conjointement avec la rotation vers l'avant du vilebrequin (15),

**caractérisé en ce que**

le dispositif de commande (CT) est configuré pour amener la rotation du rotor (30) à suivre une variation du courant circulant dans les bobinages multi-phases (W) du stator en commandant une opération de marche/arrêt de la pluralité de parties de commutation (611-616) en se fondant à la fois sur un instant d'une variation correspondant à l'extrémité avant (38a) de la partie objet d'une détection (38) et sur un instant d'une variation correspondant à l'extrémité arrière (38b) de la partie objet d'une détection (38), parmi les variations du signal électrique (D1) circulant dans le bobinage de détection (51) pendant au moins une partie d'une période de temps pendant laquelle au moins un des modes que sont le mode de commande de démarrage et le mode de commande d'accélération est exécuté, et

dans au moins une partie d'une période de temps pendant laquelle le mode de commande d'accélération est exécuté, le dispositif de commande (CT) réalise une opération de marche/arrêt de la pluralité de parties de commutation (611-616) de manière à commander un courant circulant dans un des bobinages multi-phases de stator (W) de telle manière qu'une variation du courant est répétée, et réalise une opération de marche/arrêt de la pluralité de parties de commutation (611-616) de manière à corriger une phase de variation du courant à la fois à l'instant d'une variation correspondant à l'extrémité avant (38a) de la partie objet d'une détection (38) et à l'instant d'une variation correspondant à l'extrémité arrière (38b) de la partie objet d'une détection (38), parmi les variations du signal électrique (D1) circulant dans le bobinage de détection (D1).

2. Unité motrice (EU) selon la revendication 1, où

dans au moins une partie d'au moins une des périodes de temps pendant lesquelles le mode de commande de démarrage et le mode de commande d'accélération sont exécutés, le dispositif de commande (CT) réalise une opération de marche/arrêt de la pluralité de parties de commutation (611-616) de manière à commander un courant circulant dans l'un des bobinages multi-phases de stator (W) de telle manière qu'un cycle de variation du courant change au cours du temps, et détecte la survenue d'une désynchronisation du rotor (30) en comparant, avec une phase de variation du courant circulant dans ledit bobinage multi-phases de stator (W), un instant d'une variation correspondant à l'extrémité avant (38a) de la partie objet d'une détection (38) et un instant d'une variation correspondant à l'extrémité arrière (38b) de la partie objet d'une détection (38) parmi les variations du signal électrique (D1) circulant dans le bobinage de détection (51).

3. Unité motrice (EU) selon la revendication 2, où

le dispositif de commande (CT) détecte la survenue d'une désynchronisation du rotor (30) en se fondant à la fois sur : un résultat de la comparaison d'un instant d'une variation correspondant à l'extrémité avant (38a) de la partie objet d'une détection (38) parmi les variations du signal électrique (D1) avec une plage de correspondance d'extrémité avant correspondant à l'extrémité avant dans la phase de variation du courant circulant dans ledit bobinage multi-phases de stator (W) ; et un résultat de la comparaison d'un instant d'une variation correspondant à l'extrémité arrière (38b) de la partie objet d'une détection (38) parmi les variations du signal électrique (D1) avec une plage de correspondance d'extrémité arrière correspondant à l'extrémité arrière dans la phase de variation du courant circulant dans ledit bobinage multi-phases de stator (W), la plage de correspondance d'extrémité arrière étant différente de la plage de correspondance d'extrémité avant.

**4.** Unité motrice (EU) selon la revendication 2 ou 3, où
dans une période de temps pendant laquelle le mode de commande de démarrage est exécuté, le dispositif de commande (CT) commande une opération marche/arrêt de la pluralité de parties de commutation (611-616) de telle manière qu'un cycle de variation du courant circulant dans ledit bobinage multi-phase de stator (W) est graduellement raccourci au fil du temps à partir d'un cycle initial prédéfini, et en cas de détection de la survenue d'une désynchronisation du rotor (30), commande la pluralité de parties de commutation (611-616) de telle manière qu'une variation du courant circulant dans ledit bobinage multi-phase de stator (W) est redémarrée à partir du cycle initial.

**5.** Unité motrice (EU) selon l'une quelconque des revendications 1 à 4, où le dispositif de détection de position de rotor (50) comprend un noyau (53) composé d'un matériau magnétique et sur lequel est enroulé le bobinage de détection (51), le noyau (53) ayant une face d'extrémité de détection (53a) qui est opposée à chacune de la pluralité de parties objets d'une détection (38) de part et d'autre d'une lame d'air pendant la rotation du rotor (30), et
la pluralité de parties objets d'une détection (38) sont formées de telle manière que la largeur (W2) de chacune des parties objets d'une détection (38) et l'intervalle entre les parties objets d'une détection respectives (38) par rapport à la direction circonférentielle satisfont à la relation (largeur (W2) de la partie objet d'une détection (38)) < (largeur (W1) de l'intervalle entre les parties objet d'une détection (38)) < [(largeur (W2) de la partie objet d'une détection (38)) + (largeur (W3) de la face d'extrémité de détection (53a)) x 2].

**6.** Unité motrice (EU) selon la revendication 5, où
la pluralité de parties objet d'une détection (38) sont formées de telle manière que la largeur (W1) de chacune des parties objets d'une détection (38) et l'intervalle entre les parties objets d'une détection respectives (38) par rapport à la direction circonférentielle satisfont substantiellement à la relation (largeur (W1) de l'intervalle entre les parties objet d'une détection (38)) = (largeur (W2) de la partie objet d'une détection (38)) + (largeur (W3) de la face d'extrémité de détection (53a)).

**7.** Unité motrice (EU) selon l'une quelconque des revendications 1 à 6, où
dans le mode de commande de démarrage ainsi que dans le mode de commande d'accélération, le dispositif de commande (CT) provoque la circulation d'un courant sinusoïdal dans ledit bobinage multi-phases de stator (W) en réalisant une opération de marche/arrêt de la pluralité de parties de commutation (611-616) selon un cycle plus court qu'un cycle de variation du courant circulant dans ledit bobinage multi-phases de stator (W).

**8.** Véhicule de type à enfourcher (1) comportant l'unité motrice (EU) selon l'une quelconque des revendications 1 à 7.

FIG. 1

FIG. 2

FIG. 3

FIG. 4

FIG. 5

FIG. 6

START

RECEIVE START INSTRUCTION — S11

A →

SET SPEED INITIAL VALUE — S12

RAMP DRIVING — S13

ROTATION SPEED >
DETECTION-ALLOWED SPEED? — S14

No

Yes

FORWARD END DETECTED? — S15

No

Yes

FORWARD END TIMING IS
WITHIN FORWARD END RANGE? — S16

No

Yes

REARWARD END DETECTED? — S17

No

Yes

REARWARD END TIMING IS
WITHIN REARWARD END RANGE? — S18

No

Yes

NUMBER OF TIMES END IS
DETECTED > THRESHOLD VALUE? — S19

No

Yes

ACCELERATION
CONTROL

FIG. 7

ACCELERATION
CONTROL

SYNCHRONIZATION DRIVING — S31

FORWARD END DETECTED? S35
No
Yes

FORWARD END
TIMING IS WITHIN FORWARD
END RANGE? S36
A ← No
Yes

REARWARD END DETECTED? S37
No
Yes

REARWARD END
TIMING IS WITHIN REARWARD
END RANGE? S38
A ← No
Yes

PHASE CORRECTION — S41

START COMBUSTION OPERATION — S42

ROTATION SPEED >
START COMPLETION SPEED S43
No
Yes

TERMINATE ACCELERATION
CONTROL — S44

END

FIG. 8

39

FIG. 9

FIG. 10

FIG. 11

FIG. 12

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015093554 A1
- US 4766359 A
- WO 9719358 A1
- EP 1233175 A1
- EP 3051118 A1